# EUROPEAN PATENT SPECIFICATION

(11) **EP 4 494 365 B1**
(45) Date of publication and mention of the grant of the patent: **07.10.2026**
(21) Application number: 22717026.3
(22) Date of filing: 16.03.2022
(51) Int. Cl.: H04W 4/38

(54) **SENSOR MEASUREMENT SHARING**
GEMEINSAME SENSORMESSUNG
PARTAGE DE MESURE DE CAPTEUR

(43) Date of publication of application: 22.01.2025
(73) Proprietor: Telefonaktiebolaget LM Ericsson (publ), 164 83 Stockholm (SE)
(72) Inventor: WIKSTRÖM, Gustav, 187 30 Täby (SE); RUGELAND, Patrik, 167 75 Bromma (SE); ELEFTHERIADIS, Lackis, 818 30 Valbo (SE)
(74) Representative: Ericsson
(86) International application number: PCT/SE2022/050250
(87) International publication number: WO 2023/177331

(56) References cited:
- KR-B1- 102 131 436

## Description

### TECHNICAL FIELD

The present application relates generally to sensor measurement sharing, and relates more particularly to sharing sensor measurements with mobile nodes.

### BACKGROUND

Mobile nodes such a vehicles or drones must have onboard sensors in order to sense and autonomously navigate around their surroundings, avoid collisions, etc. Onboard sensors in this regard provide timely, reliable, and confidential sensor measurements. A sensor onboard a mobile node, however, is limited to measuring from the perspective of the mobile node. Onboard sensors also escalate the cost of mobile nodes, limiting autonomous navigation, collision avoidance, and other features to high-end mobile nodes.

A sensor infrastructure web, as described by Hexa-X D1.2, would allow mobile nodes to exploit measurements from external sensors with the same timeliness, reliability, and confidentiality as onboard sensors. With less reliance on onboard sensors, even lower-end mobile nodes could feature autonomous navigation, collision avoidance, and the like. Alternatively or additionally, exploiting measurements from external sensors could improve the reliability of navigational guidance, collision avoidance, etc., since those features could be based on measurements from multiple perspectives. Challenges exist, though, to realize a sensor infrastructure web, especially one that can be used for autonomous navigation and collision avoidance. For example, challenges exist to realize a sensor infrastructure web that can provide very timely and highly reliable sensor measurements to mobile nodes, in a way that is energy efficient.

KR 102 131 436 B1 discloses methods related to advanced driver assist system wherein the driver assist system determines a driving state of a driver using information of a vehicle and provides the information to the driver to help the driver to drive safely.

### SUMMARY

An object of some embodiments herein is to provide a platform for sharing sensor measurements with mobile nodes in an energy efficient way. An alternative or additional object of some embodiments herein is to provide a platform for sharing sensor measurements that can be used by mobile nodes for highly reliable autonomous navigation and/or collision avoidance.

Some embodiments in this regard provide a server that requests sensor measurements from one or more connected sensors and then shares those sensor measurements with one or more mobile nodes, e.g., via a sensor sharing platform. The server notably tailors its sensor measurement requests to predictions about sensor measurements that will be needed by the one or more mobile nodes. The server may for example obtain predictions of locations from which sensor measurements will be needed by the one or more mobile nodes and then selectively request sensor measurements from only those connected sensor(s) that will be able to obtain sensor measurements from the predicted locations, e.g., so that connected sensors not able to obtain sensor measurements from the predicted locations can sleep and conserve energy. Alternatively or additionally, the server may obtain predictions of times at which one or more mobile nodes will need sensor measurements and then selectively request connected sensor(s) to perform sensor measurements only at the predicted times, e.g., so that the connected sensor(s) can sleep and conserve energy at other times. In these and other embodiments, then, the server may obtain sensor measurements in an energy efficient way yet still be equipped to share sensor measurements that will be needed by one or more mobile nodes. Sharing sensor measurements in this way may alternatively or additionally equip even low-end mobile nodes for highly reliable autonomous navigation and/or collision avoidance.

More particularly, embodiments herein include a method performed by a server for sharing sensor measurements with one or more mobile nodes. The method comprises obtaining predictions about sensor measurements that will be needed by the one or more mobile nodes. The method also comprises, based on the predictions, requesting sensor measurements from one or more connected sensors that are connected to the server. The method also comprises receiving the requested sensor measurements. The method also comprises sharing the received sensor measurements with the one or more mobile nodes.

In some embodiments, requesting comprises selecting, based on the predictions, from which one or more connected sensors to request sensor measurements and requesting sensor measurements from the one or more selected connected sensors. In one or more of these embodiments, the predictions include predictions of locations from which sensor measurements will be needed by one or more mobile nodes. In some embodiments, selecting from which one or more connected sensors to request sensor measurements comprises selecting one or more connected sensors that will be able to obtain sensor measurements from the predicted locations. In one or more of these embodiments, the locations from which sensor measurements will be needed at a certain time are predicted based on information indicating locations where one or more mobile nodes will be at the certain time. In one or more of these embodiments, the information indicating locations where one or more mobile nodes will be at the certain time includes respective trajectories of multiple mobile nodes. In some embodiments, the locations from which sensor measurements will be needed at the certain time are predicted as including at least locations where trajectories of multiple mobile nodes intersect. In one or more of these embodiments, the locations from which sensor measurements will be needed at the certain time are predicted also based on uncertainty in the locations where one or more mobile nodes will be at the certain time. Additionally or alternatively, the locations from which sensor measurements will be needed at the certain time are predicted also based on locations of one or more objects other than the one or more mobile nodes. In one or more of these embodiments, which one or more connected sensors the server requests sensor measurements from is adapted over time to reflect changes over time in the locations from which sensor measurements are predicted to be needed by one or more mobile nodes.

In some embodiments, the predictions include predictions of times at which one or more mobile nodes will need sensor measurements and wherein said requesting comprises requesting connected sensors to obtain sensor measurements at the predicted times. In one or more of these embodiments, the method further comprises comprising transmitting, to each of one or more connected sensors, signaling indicating times at which sensor measurements will be needed from the connected sensor and/or times at which sensor measurements will not be needed from the connected sensor.

In some embodiments, the predictions include predictions of levels of precision or accuracy with which one or more mobile nodes will need sensor measurements.

In some embodiments, obtaining predictions comprises making predictions of times at which one or more mobile nodes will need sensor measurements and/or predictions of levels of precision or accuracy with which one or more mobile nodes will need sensor measurements, based on predictions of locations from which sensor measurements will be needed by mobile nodes. Alternatively or additionally, obtaining predictions comprises making predictions of times at which one or more mobile nodes will need sensor measurements and/or predictions of levels of precision or accuracy with which one or more mobile nodes will need sensor measurements, based on characteristics of locations from which sensor measurements are predicted to be needed by one or more mobile nodes. Alternatively or additionally, obtaining predictions comprises making predictions of times at which mobile nodes will need sensor measurements and/or predictions of levels of precision or accuracy with which mobile nodes will need sensor measurements, based on criticality of sensor measurements that will be needed by one or more mobile nodes. Alternatively or additionally, obtaining predictions comprises making predictions of times at which mobile nodes will need sensor measurements and/or predictions of levels of precision or accuracy with which mobile nodes will need sensor measurements, based on age of, and/or level of precision or accuracy of, sensor measurements already available the server.

In some embodiments, requesting sensor measurements from one or more connected sensors is performed also based on at least one or more capabilities of one or more connected sensors. Additionally or alternatively, requesting sensor measurements from one or more connected sensors is performed also based on at least one or more locations of one or more connected sensors. Additionally or alternatively, requesting sensor measurements from one or more connected sensors is performed also based on at least one or more transmission resources used by one or more connected sensors. Additionally or alternatively, requesting sensor measurements from one or more connected sensors is performed also based on at least energy consumption of one or more connected sensors.

In some embodiments, said obtaining and requesting is performed as part of adapting from which one or more connected sensors the server requests sensor measurements and/or adapting when and/or how often the server requests sensor measurements from one or more connected sensors, as needed to meet a target objective while still obtaining the sensor measurements that will be needed by the one or more mobile nodes. In one or more of these embodiments, the target objective is minimization of a metric reflecting energy, and/or communication resources, consumed by one or more connected sensors in performing sensor measurements and/or consumed by one or more connected sensors in sending sensor measurements to the server. In one or more of these embodiments, the target objective is minimization of how many connected sensors send sensor measurements to the server at any given time.

In some embodiments, the method further comprises processing sensor measurements received from one or more connected sensors. In some embodiments, sharing sensor measurements with one or more mobile nodes comprises sharing processed sensor measurements. In one or more of these embodiments, the method further comprises aggregating received sensor measurements to obtain navigation instructions for one or more mobile nodes and transmitting the navigation instructions to the one or more mobile nodes.

In some embodiments, sensor measurements include at least some sensor measurements obtained by one or more onboard sensors that are onboard one or more mobile nodes and at least some sensor measurements obtained by one or more offboard sensors that are not onboard any mobile nodes.

Other embodiments herein include a server configured to share sensor measurements with mobile nodes. The server is configured to obtain predictions about sensor measurements that will be needed by mobile nodes. The server is also configured to, based on the predictions, request sensor measurements from one or more connected sensors. The server is also configured to receive the requested sensor measurements. The server is also configured to share the received sensor measurements with one or more mobile nodes.

In some embodiments, the server is configured to perform the steps described above for a server.

Other embodiments herein include a computer program comprising instructions which, when executed by at least one processor of a server, causes the server to perform the steps described above for a server. In some embodiments, a carrier containing the computer program is one of an electronic signal, optical signal, radio signal, or computer readable storage medium.

Other embodiments herein include a server configured to share sensor measurements with mobile nodes. The server comprises processing circuitry configured to obtain predictions about sensor measurements that will be needed by mobile nodes. The processing circuitry is also configured to, based on the predictions, request sensor measurements from one or more connected sensors. The server comprises processing circuitry configured to receive the requested sensor measurements. The processing circuitry is also configured to share the received sensor measurements with one or more mobile nodes.

In some embodiments, the processing circuitry is configured to perform the steps described above for a server.

Other embodiments herein include a method performed by a connected sensor configured to connect to a server. The method comprises receiving, from the server, signaling indicating times at which sensor measurements will be needed from the connected sensor and/or times at which sensor measurements will not be needed from the connected sensor. The method also comprises, based on the signaling, adapting times at which the connected sensor operates in a sleep mode.

In some embodiments, adapting comprises adapting times at which the connected sensor operates in a sleep mode so that the connected sensor operates in the sleep mode when sensor measurements will not be needed from the connected sensor and does not operate in the sleep mode when sensor measurements will be needed from the connected sensor.

Other embodiments herein include a connected sensor configured to connect to a server. The connected sensor is configured to receive, from the server, signaling indicating times at which sensor measurements will be needed from the connected sensor and/or times at which sensor measurements will not be needed from the connected sensor. The connected sensor is also configured to, based on the signaling, adapt times at which the connected sensor operates in a sleep mode.

In some embodiments, the connected sensor is configured to adapt times at which the connected sensor operates in a sleep mode so that the connected sensor operates in the sleep mode when sensor measurements will not be needed from the connected sensor and does not operate in the sleep mode when sensor measurements will be needed from the connected sensor.

Other embodiments herein include a computer program comprising instructions which, when executed by at least one processor of a connector sensor, causes the connected sensor to perform the steps described above for a connected sensor. In some embodiments, a carrier containing the computer program is one of an electronic signal, optical signal, radio signal, or computer readable storage medium.

Other embodiments herein include a connected sensor configured to connect to a server. The connected server comprises communication circuitry and processing circuitry. The processing circuitry is configured to receive, from the server, signaling indicating times at which sensor measurements will be needed from the connected sensor and/or times at which sensor measurements will not be needed from the connected sensor. The processing circuitry is also configured to, based on the signaling, adapt times at which the connected sensor operates in a sleep mode.

In some embodiments, the processing circuitry configured to adapt times at which the connected sensor operates in a sleep mode so that the connected sensor operates in the sleep mode when sensor measurements will not be needed from the connected sensor and does not operate in the sleep mode when sensor measurements will be needed from the connected sensor.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 is a block diagram of a server configured to share sensor measurements with one or more mobile nodes according to some embodiments.
Figure 2 is a block diagram of an example for requesting sensor measurements based on predictions of locations where sensor measurements will be needed by one or more mobile nodes.
Figure 3 is a block diagram of a sensor sharing system provided by a server according to some embodiments.
Figure 4A is a block diagram of a trajectory
Figures 5A-5F are signaling diagrams showing signaling between connected vehicles and a sensor sharing platform according to some embodiments.
Figure 6 is a flowchart of communication to and from the sensor sharing platform according to some embodiments.
Figure 7A is a signaling diagram for sensor measurement requests according to some embodiments.
Figure 7B is a signaling diagram for sensing state indication according to some embodiments.
Figure 8A is a flowchart of logic implemented by a sensor sharing platform according to an example.
Figure 8B is a logic flow diagram of a method for transmission pattern comparison according to some embodiments.
Figure 9A is a logic flow diagram of a method performed by a server for sharing sensor measurements with one or more mobile nodes according to some embodiments.
Figure 9B is a logic flow diagram of a method performed by a connected sensor according to some embodiments.
Figure 10A is a block diagram of a server for sharing sensor measurements with one or more mobile nodes according to some embodiments.
Figure 10B is a block diagram of a connected sensor according to some embodiments.
Figure 11 is a block diagram of a communication system in accordance with some embodiments
Figure 12 is a block diagram of a user equipment according to some embodiments.
Figure 13 is a block diagram of a network node according to some embodiments.
Figure 14 is a block diagram of a host according to some embodiments.
Figure 15 is a block diagram of a virtualization environment according to some embodiments.
Figure 16 is a block diagram of a host communicating via a network node with a UE over a partially wireless connection in accordance with some embodiments.

### DETAILED DESCRIPTION

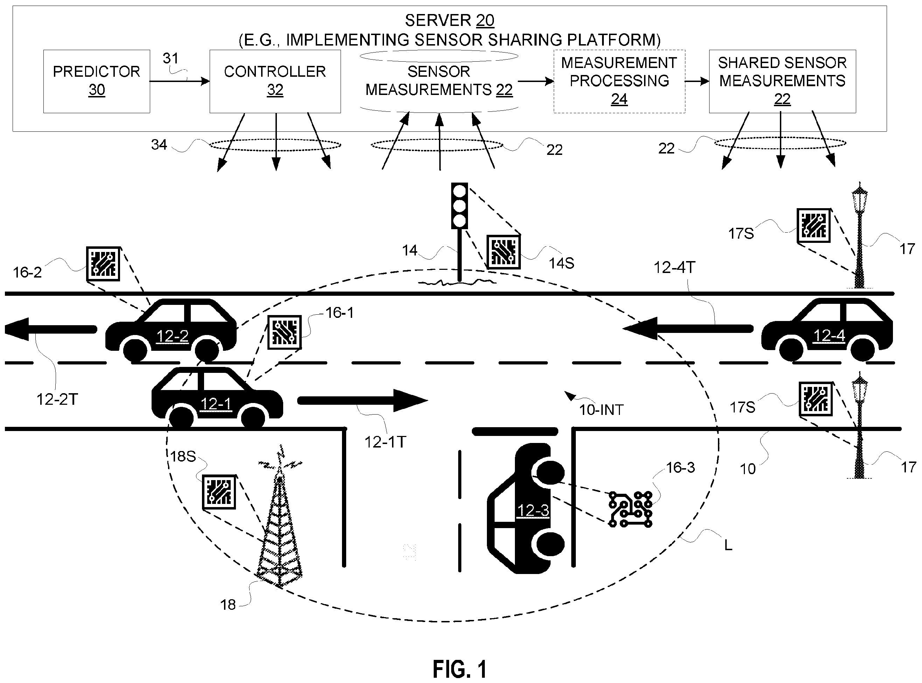

Figure 1 shows an example context for some embodiments herein. As shown, mobile nodes in the form of vehicles are traveling on a road 10. Mobile node 12-1 is traveling eastbound on the road 10 towards an intersection 10-INT, while mobile node 12-2 is traveling westbound on the road 10 away from the intersection 10-INT. Mobile node 12-3 is stopped at the intersection 10-INT, waiting on a traffic light 14. Meanwhile, mobile node 12-4 is traveling westbound on the road 10 towards the intersection 10-INT.

Some of these mobile nodes, generally referred to as mobile nodes 12, have onboard sensors for obtaining sensor measurements. As shown, for example, mobile nodes 12-1, 12-2, and 12-3 have respective onboard sensors 16-1, 16-2, and 16-3, e.g. The onboard sensors may for instance include cameras, radar sensors, sonar sensors, laser displacement sensors, and/or depth sensors, e.g., for sensing the surroundings, the presence and/or movement of other objects, or any other measurable usable for computer vision. The onboard sensors may alternatively or additionally include sensors for measuring mobile node speed and/or acceleration, steering wheel angle, accelerator pedal angle, brake pedal angle, gear position, or any other measurable usable for mobile node localization. In some embodiments, mobile nodes 12-1, 12-2, and 12-3 use their onboard sensor measurements for autonomous navigation and/or collision avoidance, e.g., to navigate through and/or avoid collisions in the intersection 10-INT.

In some embodiments, though, at least some mobile nodes lack onboard sensors or lack at least some type(s) of onboard sensors. As shown, for example, mobile node 12-4 lacks onboard sensors. Mobile node 12-4 may for instance be a lower-end and/or less expensive node that mobile nodes 12-1, 12-2, and 12-3.

Generally, then, a mobile node 12 herein may be any type of node that is mobile. A mobile node 12 may for example include a vehicle, a drone, a train, or other node that is capable of mobility. In these and other embodiments, a mobile node 12 may be or include an internet-of-things (IoT) communication device that is mobile.

In this context, Figure 1 shows a server 20 configured to obtain sensor measurements 22 from one or more connected sensors, i.e., any sensors that are capable of sending their sensor measurements to the server 20. In some embodiments, for example, the connected sensor(s) from which the server 20 obtains sensor measurements 22 includes the sensors 16-1, 16-2, and 16-3 onboard mobile nodes 12-1, 12-2, and 12-3. Alternatively or additionally, the connected sensor(s) may include sensors not associated with mobile nodes. As shown, for instance, the connected sensor(s) may include a sensor 14S integrated in or collocated with the stoplight 14 for the intersection 10-INT, a sensor 18S integrated in or collocated with a radio network node 18 providing radio coverage for a communication network, and sensors 17S integrated in or collocated with street lights 17. Regardless, after optional processing 24 of the obtained sensor measurements 22, the server 20 shares sensor measurements 22 with one or more mobile nodes. The server 20 may for example push, publish, or otherwise send the sensor measurements 22 to one or more mobile nodes that are registered with the server 20 or that request the sensor measurements 22. The server 20 may share these sensor measurements 22 in addition to or instead of transmitting navigation instructions to the one or more mobile nodes, e.g., as obtained from aggregating received sensor measurements 22.

As one example, then, the server 20 may obtain sensor measurements from sensors onboard mobile nodes 12-1, 12-2, and/or 12-3, and then share those sensor measurements 22 with mobile node 12-4. In some embodiments, mobile node 12-4 may use the shared sensor measurements 22 as if the measurements were obtained by sensors onboard mobile node 12-4, e.g., so that mobile node 12-4 can feature autonomous navigation and/or collision avoidance despite being a lower-end and/or less expensive node that lacks onboard sensors. The server 20 may alternatively or additionally share the sensor measurements 22 amongst the mobile nodes 12-1, 12-2, and 12-3 that obtained them, to provide each mobile node with sensor measurements from multiple perspectives and thereby improve reliability, e.g., for in turn realizing more reliable autonomous navigation and/or collision avoidance.

Notably, the server 20 according to some embodiments herein obtains sensor measurements 22 in an efficient way, without jeopardizing the availability of sensor measurements that mobile nodes will need, e.g., for autonomous navigation and/or collision avoidance. The server 20 in this regard includes a predictor 30 that obtains predictions 31 about sensor measurements that will be needed by one or more mobile nodes. The predictor 30 may obtain the predictions 31 by making those predictions 31 itself or by receiving the predictions 31 from another node (not shown). A controller 32 at the server 20 requests sensor measurements from one or more connected sensors based on these predictions 31, e.g., by tailoring sensor measurement requests 34 to the predictions 31. The controller 32 may for example limit from which connected sensor(s) measurements are requested, limit the times at which sensor measurements are requested, and/or limit the types of sensor measurements that are requested, as needed to request only those sensor measurements that will be needed by one or more mobile nodes according to the predictions 31.

In these and other embodiments, then, the server 20 may obtain sensor measurements in an energy efficient way yet still be equipped to share sensor measurements that will be needed by one or more mobile nodes. Sharing sensor measurements in this way may alternatively or additionally equip even low-end mobile nodes for highly reliable autonomous navigation and/or collision avoidance.

More particularly, in some embodiments, the server 20 exploits the predictions 31 to select from which connected sensor(s) to request sensor measurements. In one embodiment, for example, the predictions 31 include predictions of locations from which sensor measurements will be needed by one or more mobile nodes. In this case, the server 20 may selectively request sensor measurements from connected sensor(s) that will be able to obtain sensor measurements from the predicted locations, e.g., so that other connected sensors that won't be able to obtain sensor measurements from the predicted locations can sleep and conserve energy.

In the example of Figure 1, for instance, the server 20 obtains predictions that sensor measurements will be needed from location L corresponding to the intersection 10-INT. The server 20 may predict this based on information indicating where mobile node(s) will be. For example, the server 20 predicts that, given respective trajectories of mobile nodes, at least some of those trajectories will intersect at location L, implying that sensor measurements will be needed from location L. That is, the server 20 predicts the locations from which sensor measurements will be needed include at least locations where the mobile nodes' trajectories intersect. In the example of Figure 1, then, the server 20 predicts that the trajectories 12-1T, 12-4T of mobile nodes 12-1 and 12-4 will intersect in location L, so as to predict that sensor measurements will be needed from location L. Based on this prediction, the server 20 selectively requests sensor measurements from connected sensor(s) that will be able to obtain sensor measurements from location L. The server 20 in particular requests sensor measurements from connected sensor(s) that are deployed in location L, including connected sensor 14S associated with stoplight 14 and connected sensor 18S associated with radio network node 18. The server 20 also requests sensor measurements from connected sensor(s) that are or will be located in location L, including connected sensors 16-1 and 16-3 associated with mobile nodes 12-1 and 12-3. By contrast, because the server 20 predicts that no sensor measurements will be needed outside of location L, the server 20 refrains from requesting sensor measurements from connected sensors that are not or will not be located in location L, including connected sensors 17S associated with street lights 17 and connected sensor 16-2 associated with mobile node 12-2 that is traveling away from the location L. This may advantageously provide an opportunity for these sensors 17S, 16-2 to sleep and conserve energy, without jeopardizing availability of needed sensor measurements.

In some embodiments in this regard, connected sensors that do not receive any sensor measurement request may sleep, at least temporarily before awakening to check for sensor measurement requests again. Or, in other embodiments, the server 20 may signal information to a connected sensor that informs the sensor about whether, when, and/or for how long the sensor can sleep. The signaling may for example indicate times at which sensor measurements will be needed from the sensor and/or times at which sensor measurements will not be needed from the sensor, e.g., so that the sensor can sleep at times when sensor measurements will not be needed and awake to obtain sensor measurements at times when those measurements will be needed.

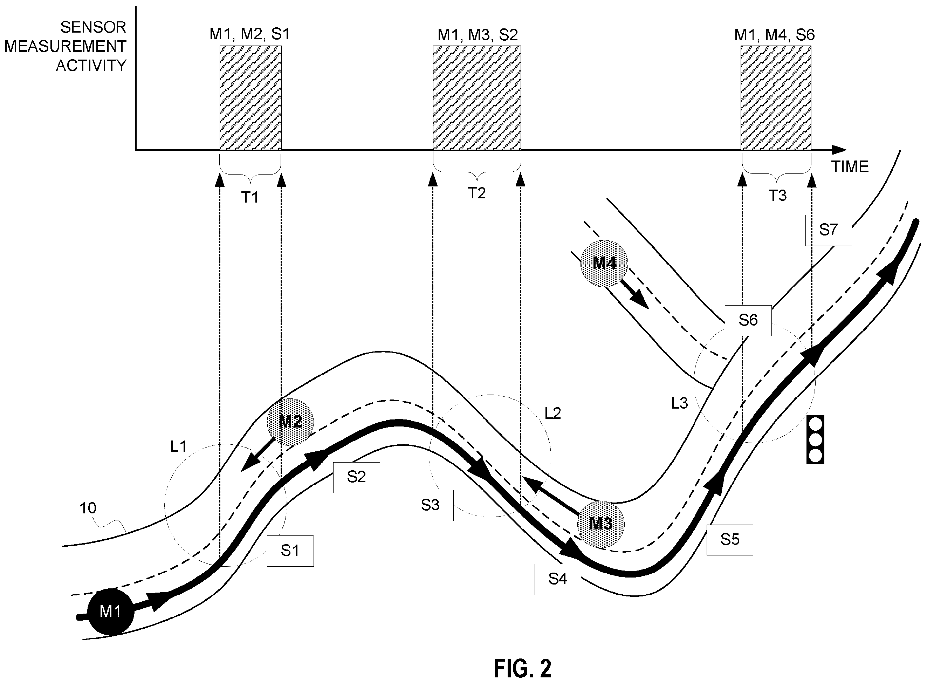

In fact, in these and other embodiments, which one or more connected sensors the server 20 requests sensor measurements from may be adapted over time to reflect changes over time in the locations from which sensor measurements are predicted to be needed by one or more mobile nodes. Figure 2 illustrates a further example of this.

As shown in Figure 2, mobile nodes M1, M2, M3, and M4, are traveling along the road 10. The server 20 receives information indicating the respective trajectories of the mobile nodes. Based on the mobile nodes' respective trajectories, the server 20 predicts that mobile node M1's trajectory will intercept mobile node M2's trajectory at location L1 during time window T1, intercept mobile node M3's trajectory at location L2 during time window T2, and intercept mobile node M4's trajectory at location L3 during time window T3. The server 20 deduces from this that mobile nodes M1 and M2 will need sensor measurements from location L1 during time window T1, mobile nodes M1 and M3 will need sensor measurements from location L2 during time window T2, and mobile nodes M1 and M4 will need sensor measurements from location L3 during time window T3.

The server 20 accordingly adapts which connected sensor(s) the server 20 requests sensor measurements from as needed to reflect changes over time in the locations from which sensor measurements are predicted to be needed. During time window T1, the server 20 selectively requests sensor measurements from mobile node M1's onboard sensors, mobile node M2's onboard sensors, and roadside sensor S1. This means the server 20 refrains from requesting measurements from other sensors, including mobile node M3's onboard sensors, mobile node M4's onboard sensors, and roadside sensors S2-S7, e.g., to give those sensors the opportunity to sleep and conserve energy during time window T1. In fact, in some embodiments, the server 20 transmits signaling to these other sensors indicating that no sensor measurements are needed from them during time window T1.

In between time window T1 and time window T2, the server 20 in some embodiments does not request measurements from any connected sensors, as the server 20 predicts that no such measurements are needed, e.g., because none of the mobile nodes' trajectories will overlap during that time window. In this case, then, all of the sensors shown will have an opportunity to sleep between time window T1 and time window T2.

During time window T2, though, the server 20 selectively requests sensor measurements from mobile node M1's onboard sensors, mobile node M3's onboard sensors, and roadside sensor S3. This means the server 20 refrains from requesting measurements from other sensors, including mobile node M2's onboard sensors, mobile node M4's onboard sensors, and roadside sensors S1-S2 and S4-S7, e.g., to give those sensors the opportunity to sleep and conserve energy during time window T2. In fact, in some embodiments, the server 20 transmits signaling to these other sensors indicating that no sensor measurements are needed from them during time window T2.

In between time window T2 and time window T3, the server 20 in some embodiments does not request measurements from any connected sensors, as the server 20 predicts that no such measurements are needed, e.g., because none of the mobile nodes' trajectories will overlap during that time window. In this case, then, all of the sensors shown will have an opportunity to sleep between time window T2 and time window T3.

Finally, during time window T3, the server 20 selectively requests sensor measurements from mobile node M1's onboard sensors, mobile node M4's onboard sensors, and roadside sensor S6. This means the server 20 refrains from requesting measurements from other sensors, including mobile node M2's onboard sensors, mobile node M3's onboard sensors, and roadside sensors S1-S5 and S7, e.g., to give those sensors the opportunity to sleep and conserve energy during time window T3. In fact, in some embodiments, the server 20 transmits signaling to these other sensors indicating that no sensor measurements are needed from them during time window T3.

In these and other embodiments, then, the server 20 may obtain predictions of times at which one or more mobile nodes will need sensor measurements and then selectively request one or more connected sensors to perform sensor measurements at the predicted times, e.g., so that the connected sensor(s) can sleep and conserve energy at other times. For example, in embodiments where connected sensors are configured to obtain and/or provide sensor measurements on demand upon receiving a sensor measurement request, the server 20 may selectively transmit sensor measurement requests during time window T1 to only sensors M1, M2, and S1, selectively transmit sensor measurement requests during time window T2 to only sensors M1, M3, and S2, and selectively transmit sensor measurement requests during time window T3 to only sensors M1, M4, and S6. As another example, in other embodiments where the server 20 proactively requests sensor measurements from connected sensor(s) in advance of when the connected sensor(s) would need to obtain those measurements, the server 20 may (i) transmit sensor measurement requests to sensors M1, M2, and S1 requesting that those sensors obtain sensor measurements during time window T1; (ii) transmit sensor measurement requests to sensors M1, M3, and S2 requesting that those sensors obtain sensor measurements during time window T2; and (iii) transmit sensor measurement requests to sensors M1, M4, and S6 requesting that those sensors obtain sensor measurements during time window T3.

Although not considered in this simplified example, in practice, the server 20 may obtain predictions 31 that nonetheless account for possible uncertainty in the locations where mobile node(s) will be. The server 20 may for instance predict that sensor measurements will be needed from more locations than it would have otherwise predicted, as a way to hedge against sensor measurements being needed from unexpected locations. Although this may create some inefficiency in sensor measurements, with sensor measurements sometimes being requested from locations that aren't needed, it may improve sensor measurement reliability.

Note, too, that the server 20 may obtain its predictions 31 also based on characteristics of locations from which sensor measurements are predicted to be needed. For example, the server 20 may predict how often sensor measurements will be needed, times at which sensor measurements will be needed, and/or levels of precision or accuracy with which sensor measurements will be needed, based on the characteristics of the locations from which sensor measurements will be needed. If the locations from which sensor measurements will be needed have high traffic, low visibility, and/or are densely urban in nature, the server 20 may predict that very frequent sensor measurements will be needed and/or highly precise or accurate sensor measurements will be needed. On the other hand, if locations from which sensor measurements will be needed have low traffic, high visibility, and/or are sparsely rural in nature, the server 20 may predict that infrequent sensor measurements will be needed and/or low precision or low accuracy sensor measurements will be needed. Generally, then, the server 20 may obtain at least some of its predictions 31 based on the characteristics of locations from which sensor measurements are predicted to be needed.

Alternatively or additionally, the server 20 in some embodiments may obtain its predictions 31 based on knowledge about locations where one or more objects other than mobile nodes will be. For example, the server 20 may narrow down its options of locations where the server 20 predicts mobile node(s) will be, based on locations of one or more objects other than mobile nodes. For instance, the server 20 may deduce that mobile nodes cannot travel to locations where objects such as buildings will be and so may accordingly exclude those building locations from its prediction of where mobile nodes will be.

Note also that, although embodiments above were described for sensor measurements in general, the embodiments may be applied on a measurement type by measurement type basis. For example, the server 20 may obtain the predictions 31 about a certain type of sensor measurements that will be needed by mobile nodes (e.g., laser displacement sensor measurements) and request sensor measurements of that certain type based on the predictions 31. Especially in these embodiments, then, the server 20 may request sensor measurements from connected sensor(s) also based on capabilities of connected sensors, e.g., so as to limit sensor measurement requests to connected sensor(s) that are capable of obtaining sensor measurements of the certain type.

Note further that the server 20 in some embodiments may obtain predictions 31 that include predictions of levels of precision or accuracy with which mobile node(s) will need sensor measurements. The server 20 may correspondingly request connected sensor(s) to obtain sensor measurements with the predicted levels of precision or accuracy. For example, in some embodiments, the server 20 may obtain predictions that highly precise or accurate sensor measurements will be needed at a location where the trajectories of fast moving mobile nodes will intersect, and so correspondingly request such highly precise or accurate sensor measurements from that location. Indeed, sensor measurements in this case may be critical for safety. By contrast, the server 20 may obtain predictions that sensor measurements will be needed with only low precision or accuracy at a location where the trajectories of slow moving mobile nodes will not intersect, but is within an area of uncertainty such that there is at least some chance that the mobile nodes will need sensor measurements from that location. In this case, where sensor measurement are less critical, the server 20 may request sensor measurements with only a low level of precision or accuracy from that location. Generally, then, the server 20 may obtain at least some of its predictions 31 based on the criticality of sensor measurements that will be needed by mobile nodes.

In still other embodiments, the server 20 may take into account the age of any sensor measurements 22 already available at the server 20 when deciding whether, how, and/or when to request sensor measurements from connected sensor(s). For example, if the server 20 predicts that sensor measurements will be needed from connected sensor(s) at a certain location, but the server 20 already has fairly recent sensor measurements from that certain location, the server 20 may decide to not request sensor measurements again, in favor of conserving energy and avoiding unnecessary sensor measurements. The server 20 may for example maintain a threshold representing how stale a sensor measurement can be before the server 20 considers the sensor measurement unusable. Such a threshold may be variable based on the type of and/or criticality of the sensor measurement. Generally, then, the server 20 may make at least some of its predictions 31 based on the age of, and/or level of precision or accuracy of, sensor measurements already available at the server 20.

In yet other embodiments, the server 20 may take into account the energy consumption of connected sensor(s) in requesting sensor measurements from those connected sensor(s). For example, in deciding which one or more connected sensors to request sensor measurements from, if any, the server 20 may favor requesting sensor measurements from one or more connected sensors that consume less energy over requesting sensor measurements from one or more connected sensors that consume more energy.

Alternatively or additionally, the server 20 may take into account the transmission resources used by connected sensor(s) in requesting sensor measurements from those connected sensor(s). For example, in deciding which connected sensor(s) to request sensor measurements from, if any, the server 20 may favor requesting sensor measurements from connected sensor(s) that use fewer transmission resources over requesting sensor measurements from connected sensor(s) that use more transmission resources.

Generally, then, the server 20 may request sensor measurements from connected sensor(s) based on capabilities of, locations of, transmission resources used by, and/or energy consumption of connected sensor(s).

In some embodiments, the server 20 obtains its predictions 31 and requests sensor measurements as described above as part of adapting from which connected sensor(s) the server 20 requests sensor measurements 22 and/or adapting when and/or how often the server 20 requests sensor measurements 22 from connected sensor(s). The server 20 may perform this adaptation as needed to meet a target objective while still obtaining the sensor measurements 22 that will be needed by the mobile node(s) 12. In one embodiment, for example, the target objective may be minimization of a metric reflecting energy, and/or communication resources, consumed by connected sensor(s) in performing sensor measurements 22 and/or consumed by connected sensor(s) in sending sensor measurements 22 to the server 20. In other embodiments, the target objective is minimization of how many connected sensors send sensor measurements 22 to the server at any given time.

The server 20 as described herein may be applied for realizing a sensor infrastructure web, as described in Hexa-X D1.2, that is efficient in terms of energy consumption and/or transmission resource usage. In this case, at least some of the mobile nodes may be simple autonomous vehicles (with no or limited sensor capabilities) moving around the environment, while relying on external third-party sensors as if they were on-board sensors. The server 20 in this case shares the third-party sensor measurements with the simple autonomous vehicle. Such a vehicle may rely on these third-party sensor measurements and/or navigation commands from the server 20 with utmost confidence in the reliability, timeliness and confidentiality of the data. This allows aggregation of sensor data across different systems, even to mobile nodes lacking their own sensor capabilities. The server 20 in this case can advertise locally relevant and trusted sensor measurements that all connected mobile nodes can access. Some embodiments thereby allow diffusion or sharing of sensor data in predefined local environments and to networks or network parts under external security management. Depending on the implementation, this use case might require the split of network ownership, network control, network transport and network security. Finally, some embodiments allow a network to advertise and distribute third-party provided sensor data in well-defined local areas.

Some embodiments herein address certain challenge(s) in this context, though. Mobile nodes that solely rely on onboard sensors and onboard data for their navigation are limited in their view of the surroundings and other moving and connected objects. This limited view jeopardizes the reliability of navigation, creating a risk that mobile nodes would collide due to insufficient sensor data and crossing trajectories. In addition, the reliance on onboard sensors necessitates integration of costly onboard sensor equipment, limiting the application to high-end devices.

The server 20 herein provides a connected sensor system as an energy efficient solution to these challenges. Some embodiments herein avoid constant activity in the connected sensor system so as to minimize the energy consumption in the network.

More particularly, the server 20 in some embodiments provides a sensor sharing platform in a communication network. Via this sensor sharing platform, the server 20 receives sensor measurements from connected sensors. In some embodiments, the server 20 filters sensor measurements into sets of sensed objects placed in a navigation grid, and receives mobile node trajectories and adjusts them to avoid conflicts. This allows connected mobile nodes to combine navigation data from onboard and offboard sensors and be assisted with navigation through safe and efficient trajectories.

In some embodiments, the information in the sensor sharing platform is used to trigger activity in the connected sensors, where optimization of the system energy consumption and/or impact on communication is minimized. The server 20 does this in some embodiments by analyzing the aggregated set of mobile node trajectories and sensor measurements to predict the future needs for sensing, considering the mobile node parameters, surroundings, available connected sensors, and/or age of existing sensor measurements.

More particularly, some embodiments provide a connected sensor system in which mobile nodes exchange spatial information for navigation with the server 20. The server 20 in this regard processes an aggregated set of data. Mobile nodes can state and access intended and processed trajectories. Mobile nodes can state and access measured and processed objects for their current and future locations. And mobile nodes can receive recommended trajectories and blocked regions.

Notably, the server 20 according to some embodiments triggers activity in connected sensors based on predictions 31 of sensing needs from reported trajectories of mobile nodes, measurements, and/or the location of mobile nodes and/or objects. The triggered activity may consist of the level and direction of measurement, target location or trajectory, resolution, measurement frequency, usage of communication versus sensing resources, sleep versus active status, and/or reporting or storing of sensor measurements. The activity decision in some embodiments is based on a prediction of needed sensor measurements from an aggregated set of reported trajectories, the availability and age of reported sensor measurements, and/or the parameters and needs of the mobile nodes. Moreover, in some embodiments, the activity decision considers energy usage minimization in connected mobile nodes and/or sensors. The decisions for the mobile nodes and triggers for sensing may further be based on a minimization of the energy usage related to conveying the sensor measurements between the server 20 and the mobile nodes, where the connected mobile nodes in the surrounding may share and relay information.

Certain embodiments may provide one or more of the following technical advantage(s): (i) reduced energy consumption for sensing of mobile node trajectories; and/or (ii) enablement of a sensor platform sharing information with mobile nodes to achieve collision avoidance.

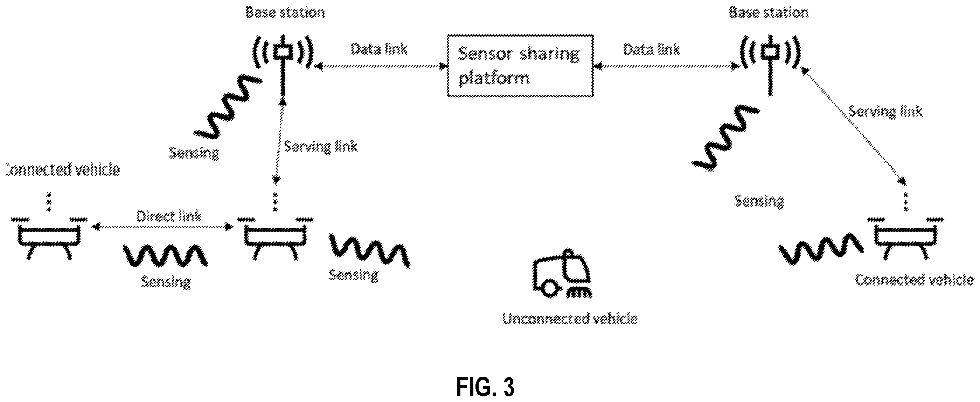

Figure 3 shows the sensor sharing system provided by the server 20 according to some embodiments where the mobile nodes are vehicles and sensor measurements are communicated wirelessly via base stations. As shown, mobile nodes in the form of vehicles obtain sensor measurements and transmit those sensor measurements via base stations to the sensor sharing platform provided by the server 20. The sensor measurements may be communicated directly to the base stations or via a sidelink between vehicles.

Some embodiments herein more specifically operate based on the following messages or data structures.

Trajectory intent: A data n-tuple with entries on e.g., time, position, velocity that a vehicle intends. Also size of vehicle and uncertainty in reported values can be signaled.

Trajectory resolution: A proposed n-tuple with a modified trajectory signaled to a vehicle of similar format as the trajectory intent.

Trajectories accept: A confirmation of the received trajectory, indicating that it is safe (if received by the vehicle) or agreed (if received by the Sensor sharing platform).

Trajectory warning: An indication that the reported trajectory risks a collision at the indicated position and time.

Trajectory request: A message indicating a request for stored trajectories within a region of interest, specified by e.g., a position and a size of the moving object.

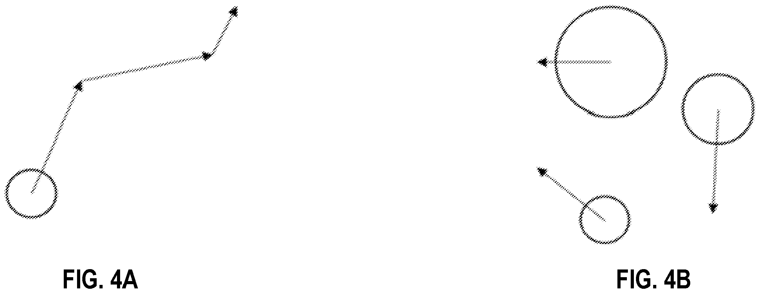

Trajectory set: A list of n-tuples each specifying a known trajectory of a connected vehicle within a region of interest, specified by e.g., a position and a size of the moving object. Figure 4A illustrates one example of a trajectory specified by such a trajectory set. The trajectory as shown is specified by a vehicle radius, accounting for uncertainty in time, position, and/or velocity. The trajectory set may further include N tuples, including a first tuple comprising *time + position + velocity vector 1,* with the Nth tuple comprising *time + position + velocity vector M.*

Sensor data set: A data n-tuple specifying measured objects, each entry containing e.g., a time, a position, a size, and a velocity, and the related uncertainties of these measurements.

Sensor data response: A data n-tuple with filtered and processed transient objects, specified in e.g., the same form as the sensor data set. By indexation a vehicle can be provided with more accurate data on an object arriving from other nodes. In one embodiment, the data set is extended with n-tuples for additional objects not reported by the vehicle.

**Transient** object request: A message indicating a request for known transient objects within a region of interest, specified by e.g., a position and a size. The message could include a request to be informed whenever the trajectory any of the tracked objects approaches the mobile nodes trajectory to a certain distance, or if the trajectories of the tracked objects are modified or a new tracked object appears, or the message can be sent periodically with updates of all tracked transient objects.

Transient object set: A list of n-tuples each specifying a known transient object within a region of interest, specified by e.g. a position and a size. Figure 4B illustrates a transient object as specified by a transient object set according to some embodiments. As shown, the transient object is specified by a first tuple that includes time + radius + position + velocity vector 1, along with uncertainty in time, radius, position, and/or velocity 1. The transient object may be specified by n such tuples, where the Nth tuple that includes time + radius + position + velocity vector N, along with uncertainty in time, radius, position, and/or velocity N.

Stationary data request: A message indicating a request for stationary objects (e.g., a 3D city map) within a region of interest, specified by e.g., a position and a size. The message could also include requested resolution and safety margins towards the mobile nodes intended trajectory.

Stationary data set: A data representation of stationary objects (e.g., a 3D city map) within a region of interest, specified by e.g., a position and a size.

Differential data request: A message indicating a request for stationary objects (e.g., a 3D city map) within a region of interest, specified by e.g., a position and a size, differing from a known version of stationary data specified by an index.

Differential data set: A data representation of stationary objects (e.g., a 3D city map) within a region of interest, specified by e.g., a position and a size, differing from a known version of stationary data specified by an index.

Here, positions are assumed to be in 3D. Velocities are assumed to be specified as vectors indicating 3D direction and 3D rotations.

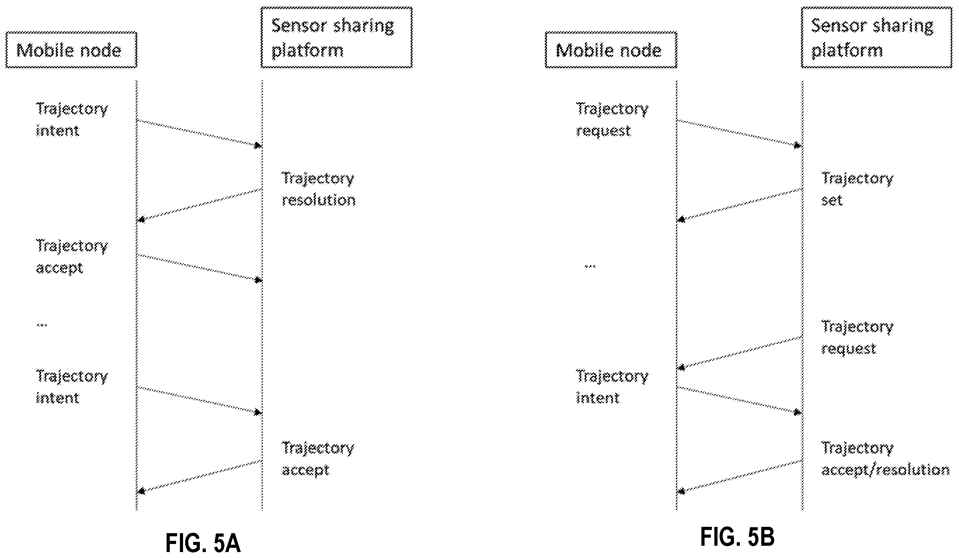

Figures 5A-5F illustrate signaling charts between a mobile node and the sensor sharing platform (through base stations), covering use of the messages described above.

Figure 5A illustrates a signaling chart between a mobile node and the sensor sharing platform, e.g., as provided by the server 20 according to some embodiments. As shown, the mobile node informs the sensor sharing platform of its planned mobility trajectory, referred to as the trajectory intent. In response, the sensor sharing platform either modifies the proposed trajectory (via a trajectory resolution) or confirms it (via a trajectory accept).

Figure 5B illustrates another signaling chart between a mobile node and the sensor sharing platform. As shown, the mobile node requests a mobility trajectory with a trajectory request, and the sensor sharing platform shares one or more possible trajectories for the mobile node to take via a trajectory set message. Alternatively or additionally, the sensor sharing network inquires the mobile node of its intended trajectory via a trajectory request, the mobile node responds with its trajectory intent, and the sensor sharing network can accept or modify that trajectory intent via trajectory accept/resolution.

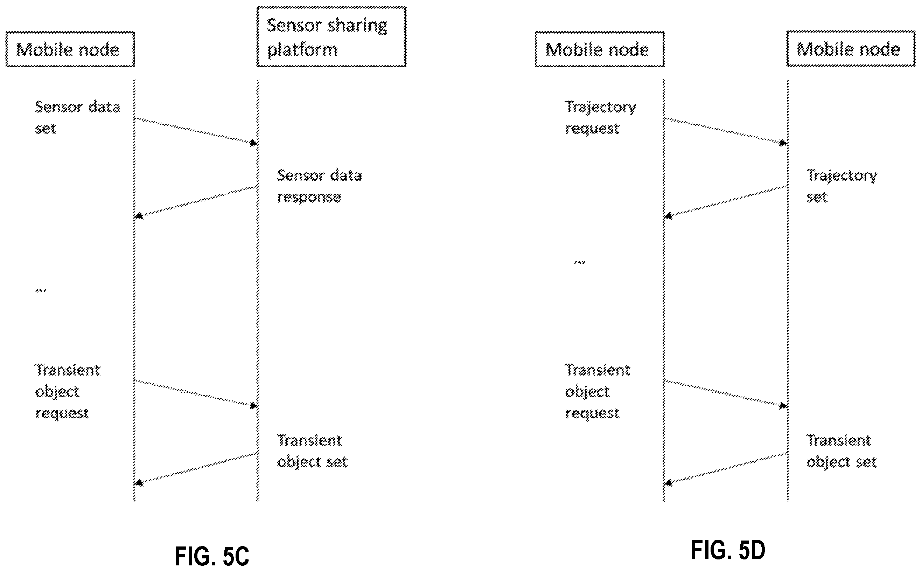

Figure 5C illustrates yet another signaling chart between a mobile node and the sensor sharing platform. The mobile node indicates its current sensing data, either which it acquired itself or which it previously received from e.g., the sensor sharing platform. The sensor sharing platform then responds with updated sensor data. Alternatively, the mobile node requests the sensor sharing platform to provide information about the trajectory of any moving object in the vicinity, to prevent collision between the mobile node and the transient object. The sensor sharing platform may respond with the transient object set.

Figure 5D illustrates still another signaling chart between two mobile node. Here, the first mobile node sends a trajectory request to request the other mobile node to inform it about its potential mobility trajectory. Alternatively, the first mobile node sends a transient object request to request the second mobile node to inform it about any moving objects in the vicinity.

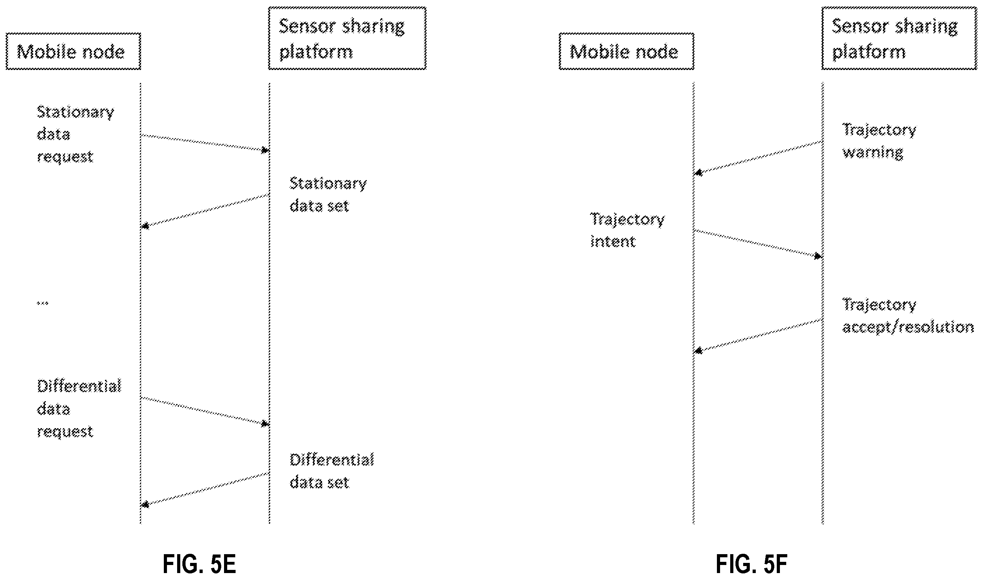

Figure 5E illustrates a further signaling chart between a mobile node and the sensor sharing platform. In this chart, the mobile node sends a stationary data request to request the sensor sharing network to inform it about any stationary objects. This request and information could either be the full set of positioning information or a differential information related to the location information the mobile node already has. The sensor sharing platform may accordingly respond by providing either a stationary data set or a differential data set.

Figure 5F illustrates another signaling chart between a mobile node and the sensor sharing platform. In this case, the sensor sharing platform sends a trajectory warning to inform the mobile node that the trajectory of another object risks colliding with the mobile node based on the mobile node's current trajectory. The mobile node sends a trajectory intent to provide an updated trajectory which the sensor sharing platform can either accept or provide a modification to.

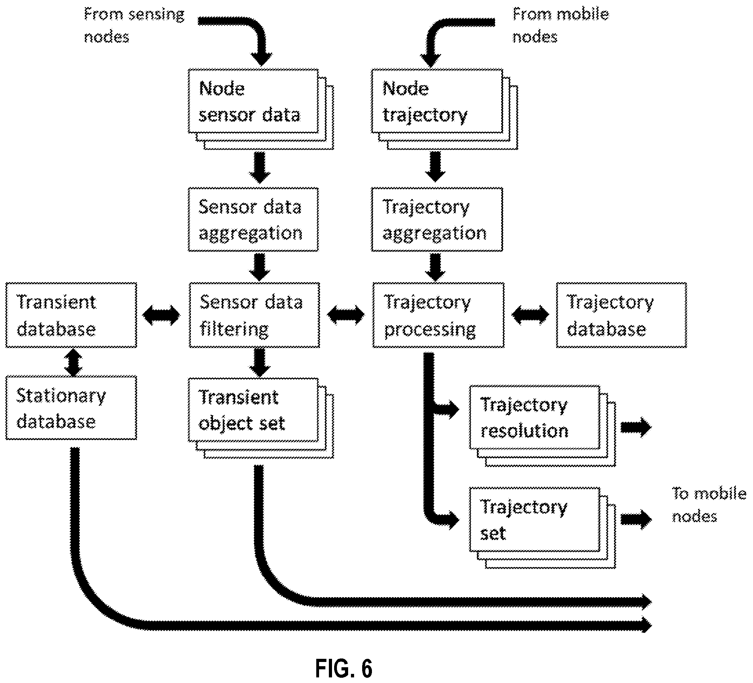

Figure 6 shows a flowchart of communication to and from the sensor sharing platform according to some embodiments in this regard. The Sensor sharing platform updates and shares databases containing known trajectories of connected mobile nodes, stationary map data (e.g., a 3D-representation of a city) and transient objects.

Based on the functionality described above, the sensor sharing platform according to some embodiments triggers the activity of connected sensors and/or network nodes based on the information available in the platform. The connected sensors and/or network nodes may include UEs, base stations, applications, and/or servers.

In some embodiments, the platform provided by the server 20 considers the aggregated set of reported mobile node trajectories and the reported sensor measurements. Based on this, the platform predicts the future need for additional sensing measurements. The prediction here exemplifies the predictions 31 in Figure 1. Indeed, the predicted future need for sensing measurements may include a prediction of the precision and/or frequency of sensing measurements needed and/or a prediction of the locations (volumes) and/or times to be sensed.

The prediction of the future need for additional sensing measurements may be based on (i) the age of available sensor measurements; (ii) the estimated future location and direction of mobile nodes, e.g., considering the uncertainty of future positions along trajectories and/or considering the presence and mobility of non-connected objects (animals, people, vehicles, etc.); (iii) the location, capability, and/or energy consumption of connected sensors (including those onboard mobile nodes) for performing sensing; (iv) the parameters and needs of the mobile node; (v) onboard capabilities of connected sensors, e.g., size, type, speed of mobile node; and/or (vi) the environment along the mobile node's trajectory, e.g., high/low traffic, dense/sparse urban/rural, good visibility, etc..

The platform provided by the server 20 may then map the predicted future sensing need to the available connected sensors. Based on this mapping, the platform selects a set of sensors for activity, e.g., considering an overall minimization of energy consumption while fulfilling the predicted sensing need. Finally, the selected set of connected sensors are triggered to sense, informing them of e.g.: (i) precision and frequency of sensing and reporting of sensor measurements; (ii) locations and times to be sensed; and/or (iii) trajectories or directions to sense.

In another embodiment, transmission patterns may be triggered based on the criticality of the mobile node or historical events (from other mobile nodes) on the same trajectory.

Note that, in some embodiments, the sensor sharing platform indicates to connected sensors about needed current or future activity in a *Sensing request* message. Such a sensing request message may exemplify requests 34 in Figure 1. The sensing request message may contain information on, for example, time, position, angle, intensity, precision, and/or frequency of requested sensing.

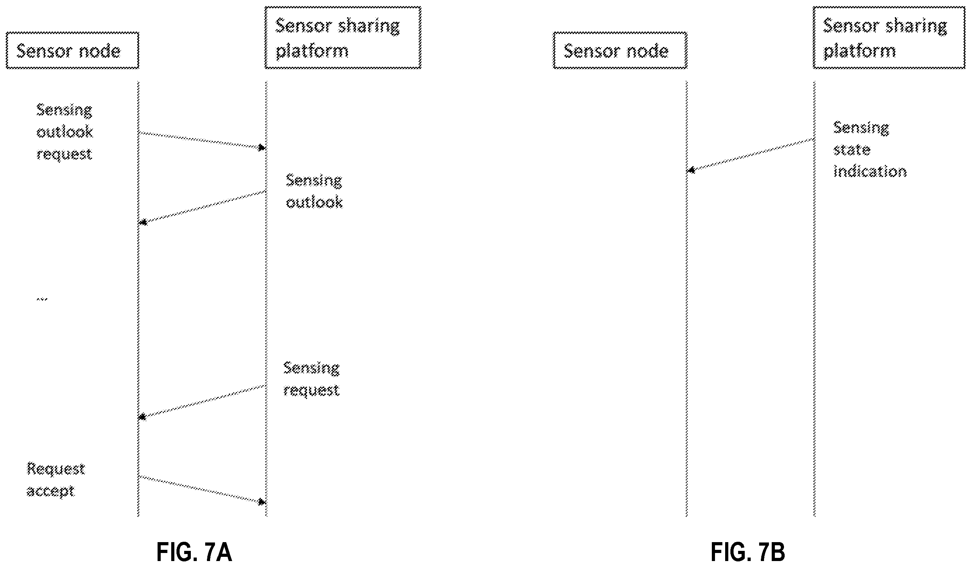

In one embodiment, a request is made by indication of a trajectory to the sensor to follow. In one embodiment, the sensor responds to the requested action with a *Request accept* message. In one embodiment, as shown in Figure 7A, a sensor may send a *Sensing outlook request,* with a timeframe, which the sensor sharing platform can respond to with a *Sensing outlook* message containing the expected need.

In some embodiments, as shown in Figure 7B, the sensing sharing platform may indicate the state a connected sensor should be in during a coming timeframe. The indication can consist of states of activity (no sensing, prepared for sensing, constant sensing) and have a validity time.

In some embodiments, the sensor sharing platform bases its indications to the connected sensors on available database information on trajectories and sensor measurements, and calculates predictions on future positions of mobile nodes (including the specific access point for efficient transmission). From the predictions, the platform can extract the volumes that should be sensed by the connected sensor system and thereby which connected sensor(s) cover the relevant volume.

In one embodiment, the platform uses different strategies to find the set of sensors that should be active at a certain time. In one such example, the energy consumption of the sensor platform with connected nodes is minimized by only actively sensing in volumes where mobile nodes are/will be present, considering the reported energy consumption of connected sensors when performing sensing. In another such example, the use of communication resources is minimized, such that base stations capable of joint communication and sensing are used to a minimal extent.

In another embodiment, the platform determines, based on the energy usage of the power amplifier (where the power usage is measured), for each frame, and thereby symbols, correlate it in relation to the transmitted power of the radio unit, to determine both the trajectory and the location of a data package.

Note: The TX power amplifier transmission pattern sets the coverage of the cell, or multiple cells from one node.

In another embodiment, based on the power measure, the sensor system determines an energy index value within the coverage area of the cell. The different energy index value can be identified to set the future power values of the power amplifier, for different user and routing. By using the energy index, the future prediction of trajectory and power usage can be determined.

In an extension of the above embodiment, the sensor information (critical, or noncritical) can be classified, and rerouting can be based on the aspect of proposing an energy efficient trajectory scheduling.

Various sensor data volume of the sensor information and platform consume power, and based on the information, of energy index, the best (low energy) carrier can be selected from the vehicle. By determining the consume energy for each frame structure and symbols, the data volume is representative also as an energy volume, related to different location, when e:g a vehicle can determine a low power transition or receive information from dedicated node.

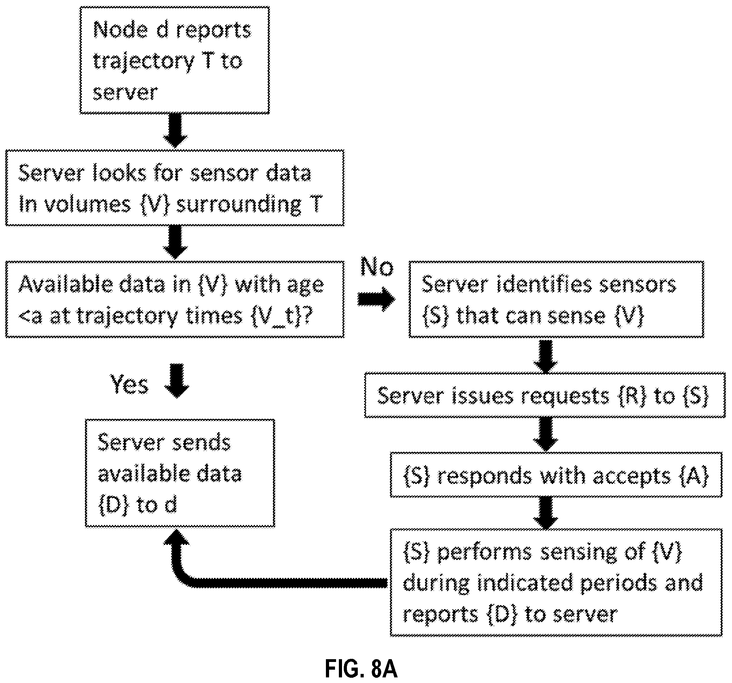

Consider an example implementation shown in Figure 8A, where the sensor measurements are referred to as sensor data. The server 20 receives a trajectory T at time t indicating the path of a device d. The server 20 looks in its database to see if it has available sensor data, in volumes (V) surrounding the trajectory T, that has an age less than a at trajectory times {V_T}.

If there is available sensor data along T newer than age a at times {T_v} in the volumes {V} surrounding T, (and optionally if the data further fulfills some quality condition Q when it comes to e.g., precision), the server 20 determines the relevant sensors {S} do not need to be contacted with sensing requests. Available sensor data is fed to d.

By contrast, if there's no available sensor data along T newer than age a, the server 20 assigns a set of volumes {V} around T to be sensed at times {T_v}, e.g., as cylinders of a predetermined length around T. After searching the database of connected sensors {S} capable of sensing {V}, a set of sensing requests {R} are issued to {S} informing them to sense {V} at times around {T_v}, e.g., starting sensing at {T_v} - a pre-sense time T_pre and ending sensing at {T_v} + post-sense time T_post. Before {T_v}-T_pre and after {T_v}+T_post the sensors {S} can be turned off. The requests {R} are received by sensors {S} which in turn reply with request accepts {A}. Sensor data from {S} are subsequently fed to d.

In another embodiment, energy related data per bit, (or Joule) per transition pattern representation, n-tuple and in relation to trajectory/position make a proposal of a new transmission pattern based on endpoints or point to point trajectory, in relation to the stationary nodes where multiple transmission points may exist in a network.

Based on the frame structure, e.g., LTE, some embodiments determine based on the utilization of the frame, how many data symbols have been added to the frame. Furthermore some embodiments determine the energy usage for e.g., the power amplifier (where power usage is measured), and relate it to a certain transmission pattern, and based on that translate it to energy consumption. Based on this information, some embodiments then apply the techniques to minimize the energy usage.

Information to the transmission is retrieved based on vehicle, point to point relation, and/or point to end point relations.

Another embodiment (related to access nodes) and transmission to vehicle, is to generate (energy transmission based) space representation of trajectory of vehicles, and their dedicated transmission power from the access nodes.

A space representation may be generated based on historical data of current vehicle or other vehicles, related to same or similar trajectories along same path.

The representation of energy consumption transmission may include transmission related to machine-to-machine (M2M), via direct link or shared link. As transmission power e.g. from a UE is related to the distance to the radio base station (RBS), the UE/device/vehicle can select instead to enable transmission via a shared direct link.

This is another way of enabling transmitting information between M2M. Historical data is to be used to also predict the future trajectories and the data power usage, to be able to achieve low power consumption operation. Some embodiments thereby enable low power transmitting based on space representation.

In another embodiment, the shared link can reduce the transmitted power of current device, by allowing the nearest neighbor M2M, transmits it data to the radio bases station.

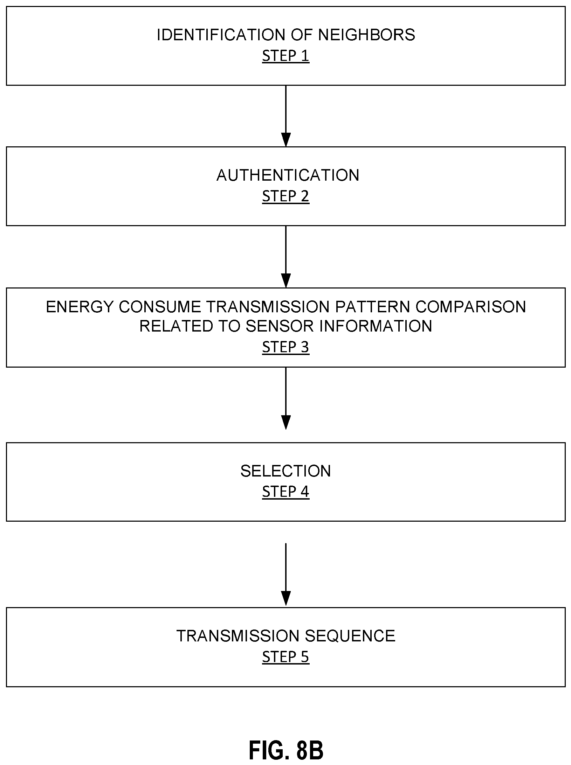

Figure 8B shows a procedure for how transmission pattern comparison may be made:
Step 1: An identification of neighbors are made
Step 2: Authentication
Step 3: Energy consume transmission pattern comparison related to sensor information
Step 4: Selection
Step 5: Transmission sequence. A selection can be made either to transmit via a neighbor or direct to a RBS, since transmission to RBS consumer more power from the device/vehicle that shared to a neighbor.

The procedure is looped and continues as based on sensor information to be shared.

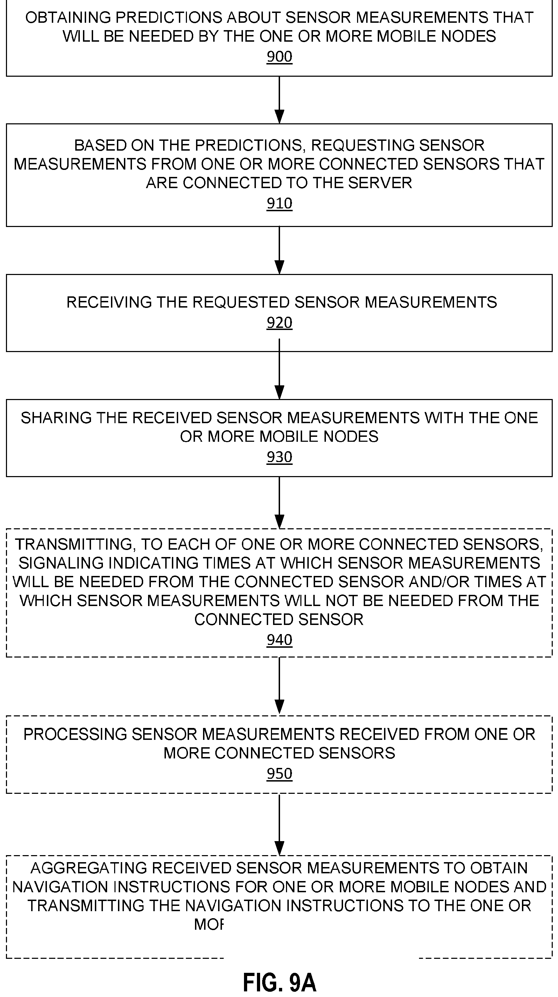

In view of the modifications and variations herein, Figure 9A depicts a method performed by a server 20 for sharing sensor measurements 22 with mobile nodes 12. The method comprises obtaining predictions 31 about sensor measurements 22 that will be needed by the one or more mobile nodes 12 (Block 900). The method also comprises, based on the predictions 31, requesting sensor measurements 22 from one or more connected sensors that are connected to the server 20 (Block 910). The method further comprises receiving the requested sensor measurements 22 (Block 920). The method further comprises sharing the received sensor measurements 22 with the one or more mobile nodes 12 (Block 930).

In some embodiments, requesting the sensor measurements 22 comprises selecting, based on the predictions 31, from which one or more connected sensors to request sensor measurements 22 and requesting sensor measurements 22 from the one or more selected connected sensors. In one or more of these embodiments, the predictions 31 include predictions 31 of locations from which sensor measurements 22 will be needed by one or more mobile nodes 12. In this case, selecting from which one or more connected sensors to request sensor measurements 22 may comprise selecting one or more connected sensors that will be able to obtain sensor measurements from the predicted locations. In one or more of these embodiments, the locations from which sensor measurements 22 will be needed at a certain time are predicted based on information indicating locations where one or more mobile nodes 12 will be at the certain time. For example, the information indicating locations where one or more mobile nodes 12 will be at the certain time may include respective trajectories of the multiple mobile nodes 12. In this case, the locations from which sensor measurements 22 will be needed at the certain time may be predicted as including at least locations where trajectories of the multiple mobile nodes 12 intersect.

In some embodiments, the locations from which sensor measurements 22 will be needed at the certain time are predicted also based on uncertainty in the locations where one or more mobile nodes 12 will be at the certain time. Additionally or alternatively, the locations from which sensor measurements 22 will be needed at the certain time are predicted also based on locations of one or more objects other than the one or more mobile nodes 12.

In some embodiments, which one or more connected sensors the server 20 requests sensor measurements 22 from is adapted over time to reflect changes over time in the locations from which sensor measurements 22 are predicted to be needed by one or more mobile nodes 12.

In some embodiments, the predictions 31 include predictions 31 of times at which one or more mobile nodes 12 will need sensor measurements 22 and wherein said requesting comprises requesting connected sensors to obtain sensor measurements 22 at the predicted times. In one or more of these embodiments, the method further comprises comprising transmitting, to each of one or more connected sensors, signaling indicating times at which sensor measurements 22 will be needed from the connected sensor and/or times at which sensor measurements 22 will not be needed from the connected sensor (Block 940).

In some embodiments, the predictions 31 include predictions 31 of levels of precision or accuracy with which one or more mobile nodes 12 will need sensor measurements 22.

In some embodiments, obtaining predictions 31 comprises making predictions 31 of times at which one or more mobile nodes 12 will need sensor measurements 22 and/or predictions 31 of levels of precision or accuracy with which one or more mobile nodes 12 will need sensor measurements 22, based on predictions 31 of locations from which sensor measurements 22 will be needed by one or more mobile nodes 12. Alternatively or additionally, obtaining predictions 31 comprises making predictions 31 of times at which one or more mobile nodes 12 will need sensor measurements 22 and/or predictions 31 of levels of precision or accuracy with which one or more mobile nodes 12 will need sensor measurements 22, based on characteristics of locations from which sensor measurements 22 are predicted to be needed by one or more mobile nodes 12. Alternatively or additionally, obtaining predictions 31 comprises making predictions 31 of times at which one or more mobile nodes 12 will need sensor measurements 22 and/or predictions 31 of levels of precision or accuracy with which one or more mobile nodes 12 will need sensor measurements 22, based on criticality of sensor measurements 22 that will be needed by one or more mobile nodes 12. Alternatively or additionally, obtaining predictions 31 comprises making predictions 31 of times at which one or more mobile nodes 12 will need sensor measurements 22 and/or predictions 31 of levels of precision or accuracy with which one or more mobile nodes 12 will need sensor measurements 22, based on age of, and/or level of precision or accuracy of, sensor measurements 22 already available the server 20.

In some embodiments, requesting sensor measurements 22 from one or more connected sensors is performed also based on one or more capabilities of one or more connected sensors. Additionally or alternatively, requesting sensor measurements 22 from one or more connected sensors is performed also based on one or more locations of one or more connected sensors. Additionally or alternatively, requesting sensor measurements 22 from one or more connected sensors is performed also based on one or more transmission resources used by one or more connected sensors. Additionally or alternatively, requesting sensor measurements 22 from one or more connected sensors is performed also based on energy consumption of one or more connected sensors.

In some embodiments, said obtaining and requesting is performed as part of adapting from which one or more connected sensors the server 20 requests sensor measurements 22 and/or adapting when and/or how often the server 20 requests sensor measurements 22 from one or more connected sensors, as needed to meet a target objective while still obtaining the sensor measurements 22 that will be needed by the one or more mobile nodes 12. In one or more of these embodiments, the target objective is minimization of a metric reflecting energy, and/or communication resources, consumed by one or more connected sensors in performing sensor measurements 22 and/or consumed by one or more connected sensors in sending sensor measurements 22 to the server 20. In one or more of these embodiments, the target objective is minimization of how many connected sensors send sensor measurements 22 to the server 20 at any given time.

In some embodiments, the method further comprises processing sensor measurements 22 received from one or more connected sensors (Block 950). In some embodiments, sharing sensor measurements 22 with one or more mobile nodes 12 comprises sharing processed sensor measurements 22.

In some embodiments, the method further comprises aggregating received sensor measurements 22 to obtain navigation instructions for one or more mobile nodes 12 and transmitting the navigation instructions to the one or more mobile nodes 12 (Block 960).

In some embodiments, sensor measurements 22 include at least some sensor measurements 22 obtained by one or more onboard sensors that are onboard one or more mobile nodes 12 and at least some sensor measurements 22 obtained by one or more offboard sensors that are not onboard any mobile nodes 12.

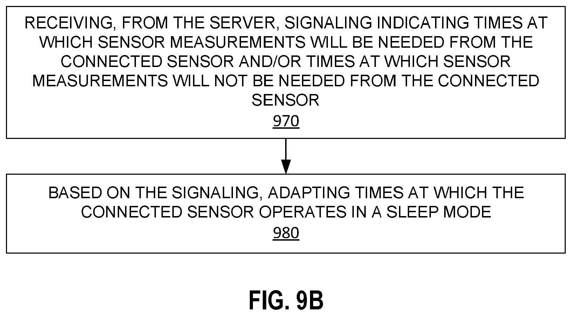

Figure 9B depicts a method performed by a connected sensor. The method comprises receiving, from the server 20, signaling indicating times at which sensor measurements 22 will be needed from the connected sensor and/or times at which sensor measurements 22 will not be needed from the connected sensor (Block 970). The method also comprises, based on the signaling, adapting times at which the connected sensor operates in a sleep mode (Block 980). In the sleep mode, the connected sensor may power off one or more of its components in favor of conserving power. In some embodiments, the component(s) powered off during the sleep mode may render the connected sensor not capable (or at least less capable) of performing sensor measurements 22. In these and other embodiments, then, adaptation may entail adapting times at which the connected sensor operates in a sleep mode so that the connected sensor operates in the sleep mode when sensor measurements 22 will not be needed from the connected sensor and does not operate in the sleep mode when sensor measurements 22 will be needed from the connected sensor.

Embodiments herein also include corresponding apparatus. Embodiments herein for instance include a server 20 configured to perform any of the steps of any of the embodiments described above for the server 20.

Embodiments also include a server 20 comprising processing circuitry and power supply circuitry. The processing circuitry is configured to perform any of the steps of any of the embodiments described above for the server 20. The power supply circuitry is configured to supply power to the server 20.

Embodiments further include a server 20 comprising processing circuitry. The processing circuitry is configured to perform any of the steps of any of the embodiments described above for the server 20. In some embodiments, the server 20 further comprises communication circuitry.

Embodiments further include a server 20 comprising processing circuitry and memory. The memory contains instructions executable by the processing circuitry whereby the server 20 is configured to perform any of the steps of any of the embodiments described above for the server 20.

Embodiments herein also include a connected sensor configured to perform any of the steps of any of the embodiments described above for a connected sensor.

Embodiments also include a connected sensor comprising processing circuitry and power supply circuitry. The processing circuitry is configured to perform any of the steps of any of the embodiments described above for a connected sensor. The power supply circuitry is configured to supply power to the connected sensor.

Embodiments further include a connected sensor comprising processing circuitry. The processing circuitry is configured to perform any of the steps of any of the embodiments described above for a connected sensor. In some embodiments, the connected sensor further comprises communication circuitry.

Embodiments further include a connected sensor comprising processing circuitry and memory. The memory contains instructions executable by the processing circuitry whereby the connected sensor is configured to perform any of the steps of any of the embodiments described above for a connected sensor.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

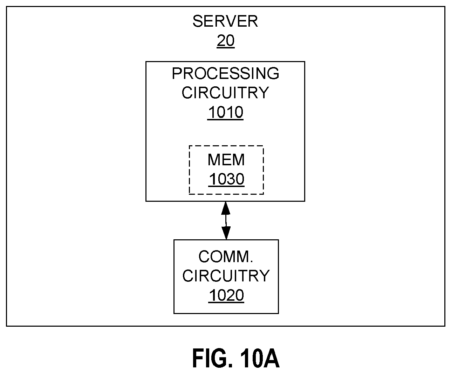

Figure 10A for example illustrates a server 20 as implemented in accordance with one or more embodiments. As shown, the server 20 includes processing circuitry 1010 and communication circuitry 1020. The communication circuitry 1020 is configured to transmit and/or receive information to and/or from one or more other nodes, e.g., via any communication technology. The processing circuitry 1010 is configured to perform processing described above, e.g., in Figure 9A, such as by executing instructions stored in memory 1030. The processing circuitry 1010 in this regard may implement certain functional means, units, or modules.

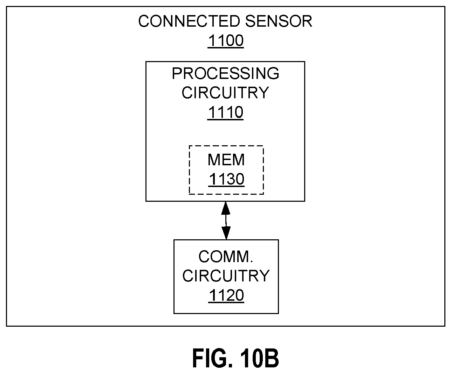

Figure 10B for example illustrates a connected sensor 1100 as implemented in accordance with one or more embodiments. The connected sensor 1100 may for instance be any of connected sensors 16-1, 16-2, 16-3, 14S, 18S, 17S, etc. illustrated in Figure 1. As shown, the connected sensor 1100 includes processing circuitry 1110 and communication circuitry 1120. The communication circuitry 1120 is configured to transmit and/or receive information to and/or from the server 20, e.g., via any communication technology. The processing circuitry 1110 is configured to perform processing described above, e.g., in Figure 9B, such as by executing instructions stored in memory 1130. The processing circuitry 1110 in this regard may implement certain functional means, units, or modules.

Those skilled in the art will also appreciate that embodiments herein further include corresponding computer programs.

A computer program comprises instructions which, when executed on at least one processor of a server 20, cause the server 20 to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of a server 20, cause the server 20 to perform as described above.

Embodiments further include a computer program product comprising program code portions for performing the steps of any of the embodiments herein when the computer program product is executed by a server 20. This computer program product may be stored on a computer readable recording medium.

A computer program comprises instructions which, when executed on at least one processor of a connected sensor 1100, cause the connected sensor 1100 to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of a connected sensor 1100, cause the connected sensor 1100 to perform as described above.

Embodiments further include a computer program product comprising program code portions for performing the steps of any of the embodiments herein when the computer program product is executed by a connected sensor 1100. This computer program product may be stored on a computer readable recording medium.

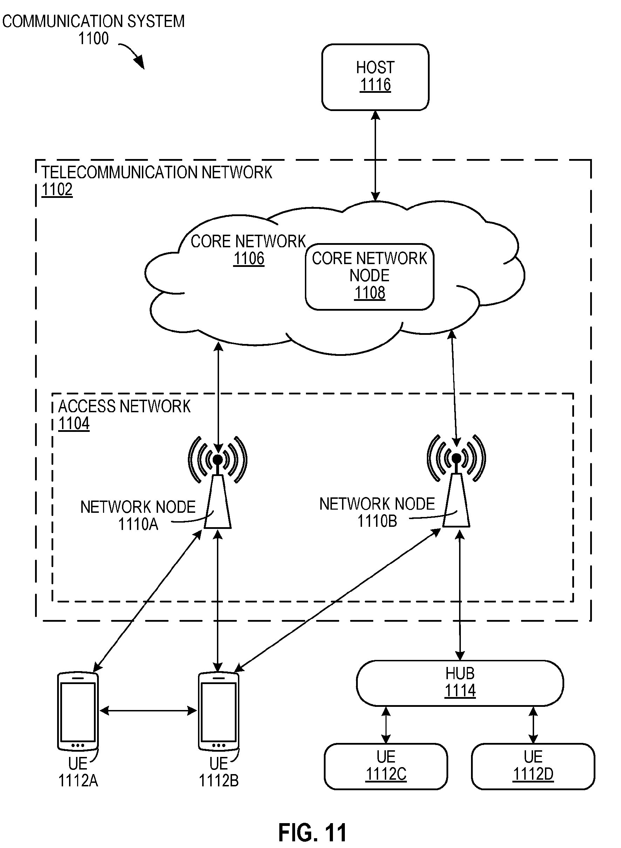

Figure 11 shows an example of a communication system 1100 within which some embodiments herein may be operable.

In the example, the communication system 1100 includes a telecommunication network 1102 that includes an access network 1104, such as a radio access network (RAN), and a core network 1106, which includes one or more core network nodes 1108. The access network 1104 includes one or more access network nodes, such as network nodes 1110a and 1110b (one or more of which may be generally referred to as network nodes 1110), or any other similar 3^{rd} Generation Partnership Project (3GPP) access node or non-3GPP access point. The network nodes 1110 facilitate direct or indirect connection of user equipment (UE), such as by connecting UEs 1112a, 1112b, 1112c, and 1112d (one or more of which may be generally referred to as UEs 1112) to the core network 1106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 1100 may include any number of wired or wireless networks, network nodes, UEs, and/or any other components or systems that may facilitate or participate in the communication of data and/or signals whether via wired or wireless connections. The communication system 1100 may include and/or interface with any type of communication, telecommunication, data, cellular, radio network, and/or other similar type of system.

The UEs 1112 may be any of a wide variety of communication devices, including wireless devices arranged, configured, and/or operable to communicate wirelessly with the network nodes 1110 and other communication devices. Similarly, the network nodes 1110 are arranged, capable, configured, and/or operable to communicate directly or indirectly with the UEs 1112 and/or with other network nodes or equipment in the telecommunication network 1102 to enable and/or provide network access, such as wireless network access, and/or to perform other functions, such as administration in the telecommunication network 1102.

In the depicted example, the core network 1106 connects the network nodes 1110 to one or more hosts, such as host 1116. These connections may be direct or indirect via one or more intermediary networks or devices. In other examples, network nodes may be directly coupled to hosts. The core network 1106 includes one more core network nodes (e.g., core network node 1108) that are structured with hardware and software components. Features of these components may be substantially similar to those described with respect to the UEs, network nodes, and/or hosts, such that the descriptions thereof are generally applicable to the corresponding components of the core network node 1108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 1116 may be under the ownership or control of a service provider other than an operator or provider of the access network 1104 and/or the telecommunication network 1102, and may be operated by the service provider or on behalf of the service provider. The host 1116 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 1100 of Figure 11 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 1102 is a cellular network that implements 3GPP standardized features. Accordingly, the telecommunications network 1102 may support network slicing to provide different logical networks to different devices that are connected to the telecommunication network 1102. For example, the telecommunications network 1102 may provide Ultra Reliable Low Latency Communication (URLLC) services to some UEs, while providing Enhanced Mobile Broadband (eMBB) services to other UEs, and/or Massive Machine Type Communication (mMTC)/Massive loT services to yet further UEs.

In some examples, the UEs 1112 are configured to transmit and/or receive information without direct human interaction. For instance, a UE may be designed to transmit information to the access network 1104 on a predetermined schedule, when triggered by an internal or external event, or in response to requests from the access network 1104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 1114 communicates with the access network 1104 to facilitate indirect communication between one or more UEs (e.g., UE 1112c and/or 1112d) and network nodes (e.g., network node 1110b). In some examples, the hub 1114 may be a controller, router, content source and analytics, or any of the other communication devices described herein regarding UEs. For example, the hub 1114 may be a broadband router enabling access to the core network 1106 for the UEs. As another example, the hub 1114 may be a controller that sends commands or instructions to one or more actuators in the UEs. Commands or instructions may be received from the UEs, network nodes 1110, or by executable code, script, process, or other instructions in the hub 1114. As another example, the hub 1114 may be a data collector that acts as temporary storage for UE data and, in some embodiments, may perform analysis or other processing of the data. As another example, the hub 1114 may be a content source. For example, for a UE that is a VR headset, display, loudspeaker or other media delivery device, the hub 1114 may retrieve VR assets, video, audio, or other media or data related to sensory information via a network node, which the hub 1114 then provides to the UE either directly, after performing local processing, and/or after adding additional local content. In still another example, the hub 1114 acts as a proxy server or orchestrator for the UEs, in particular in if one or more of the UEs are low energy loT devices.

The hub 1114 may have a constant/persistent or intermittent connection to the network node 1110b. The hub 1114 may also allow for a different communication scheme and/or schedule between the hub 1114 and UEs (e.g., UE 1112c and/or 1112d), and between the hub 1114 and the core network 1106. In other examples, the hub 1114 is connected to the core network 1106 and/or one or more UEs via a wired connection. Moreover, the hub 1114 may be configured to connect to an M2M service provider over the access network 1104 and/or to another UE over a direct connection. In some scenarios, UEs may establish a wireless connection with the network nodes 1110 while still connected via the hub 1114 via a wired or wireless connection. In some embodiments, the hub 1114 may be a dedicated hub - that is, a hub whose primary function is to route communications to/from the UEs from/to the network node 1110b. In other embodiments, the hub 1114 may be a non-dedicated hub - that is, a device which is capable of operating to route communications between the UEs and network node 1110b, but which is additionally capable of operating as a communication start and/or end point for certain data channels.

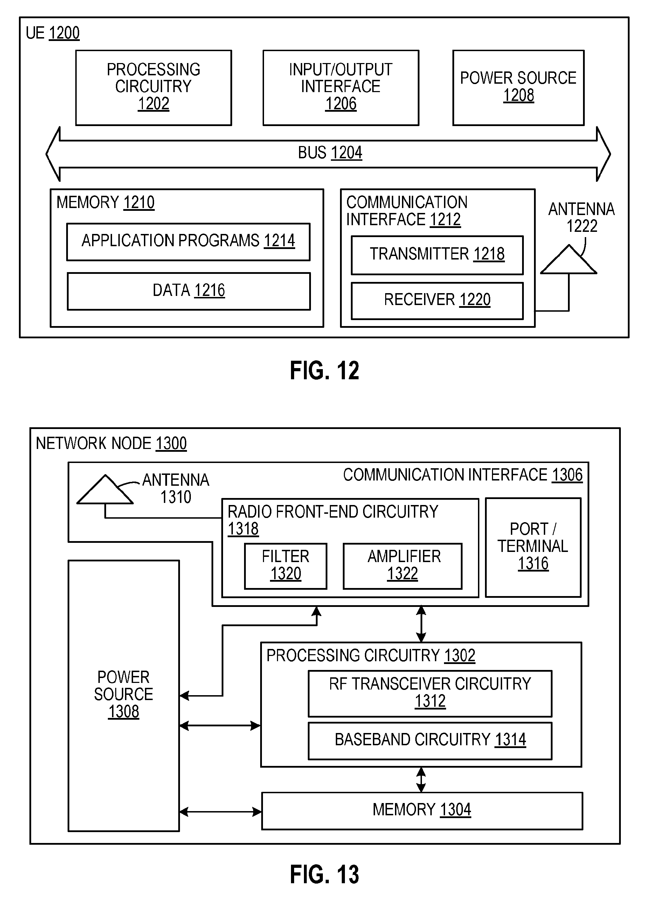

Figure 12 shows a UE 1200 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 1200 includes processing circuitry 1202 that is operatively coupled via a bus 1204 to an input/output interface 1206, a power source 1208, a memory 1210, a communication interface 1212, and/or any other component, or any combination thereof. Certain UEs may utilize all or a subset of the components shown in Figure 12. The level of integration between the components may vary from one UE to another UE. Further, certain UEs may contain multiple instances of a component, such as multiple processors, memories, transceivers, transmitters, receivers, etc.

The processing circuitry 1202 is configured to process instructions and data and may be configured to implement any sequential state machine operative to execute instructions stored as machine-readable computer programs in the memory 1210. The processing circuitry 1202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 1202 may include multiple central processing units (CPUs).

In the example, the input/output interface 1206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 1200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 1208 is structured as a battery or battery pack. Other types of power sources, such as an external power source (e.g., an electricity outlet), photovoltaic device, or power cell, may be used. The power source 1208 may further include power circuitry for delivering power from the power source 1208 itself, and/or an external power source, to the various parts of the UE 1200 via input circuitry or an interface such as an electrical power cable. Delivering power may be, for example, for charging of the power source 1208. Power circuitry may perform any formatting, converting, or other modification to the power from the power source 1208 to make the power suitable for the respective components of the UE 1200 to which power is supplied.

The memory 1210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 1210 includes one or more application programs 1214, such as an operating system, web browser application, a widget, gadget engine, or other application, and corresponding data 1216. The memory 1210 may store, for use by the UE 1200, any of a variety of various operating systems or combinations of operating systems.

The memory 1210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 1210 may allow the UE 1200 to access instructions, application programs and the like, stored on transitory or non-transitory memory media, to off-load data, or to upload data. An article of manufacture, such as one utilizing a communication system may be tangibly embodied as or in the memory 1210, which may be or comprise a device-readable storage medium.

The processing circuitry 1202 may be configured to communicate with an access network or other network using the communication interface 1212. The communication interface 1212 may comprise one or more communication subsystems and may include or be communicatively coupled to an antenna 1222. The communication interface 1212 may include one or more transceivers used to communicate, such as by communicating with one or more remote transceivers of another device capable of wireless communication (e.g., another UE or a network node in an access network). Each transceiver may include a transmitter 1218 and/or a receiver 1220 appropriate to provide network communications (e.g., optical, electrical, frequency allocations, and so forth). Moreover, the transmitter 1218 and receiver 1220 may be coupled to one or more antennas (e.g., antenna 1222) and may share circuit components, software or firmware, or alternatively be implemented separately.

In the illustrated embodiment, communication functions of the communication interface 1212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 1212, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an loT device comprises circuitry and/or software in dependence of the intended application of the loT device in addition to other components as described in relation to the UE 1200 shown in Figure 12.

As yet another specific example, in an loT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-loT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 13 shows a network node 1300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1300 includes a processing circuitry 1302, a memory 1304, a communication interface 1306, and a power source 1308. The network node 1300 may be composed of multiple physically separate components (e.g., a NodeB component and a RNC component, or a BTS component and a BSC component, etc.), which may each have their own respective components. In certain scenarios in which the network node 1300 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1300 may be configured to support multiple radio access technologies (RATs). In such embodiments, some components may be duplicated (e.g., separate memory 1304 for different RATs) and some components may be reused (e.g., a same antenna 1310 may be shared by different RATs). The network node 1300 may also include multiple sets of the various illustrated components for different wireless technologies integrated into network node 1300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1300.

The processing circuitry 1302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1300 components, such as the memory 1304, to provide network node 1300 functionality.

In some embodiments, the processing circuitry 1302 includes a system on a chip (SOC). In some embodiments, the processing circuitry 1302 includes one or more of radio frequency (RF) transceiver circuitry 1312 and baseband processing circuitry 1314. In some embodiments, the radio frequency (RF) transceiver circuitry 1312 and the baseband processing circuitry 1314 may be on separate chips (or sets of chips), boards, or units, such as radio units and digital units. In alternative embodiments, part or all of RF transceiver circuitry 1312 and baseband processing circuitry 1314 may be on the same chip or set of chips, boards, or units.

The memory 1304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1302. The memory 1304 may store any suitable instructions, data, or information, including a computer program, software, an application including one or more of logic, rules, code, tables, and/or other instructions capable of being executed by the processing circuitry 1302 and utilized by the network node 1300. The memory 1304 may be used to store any calculations made by the processing circuitry 1302 and/or any data received via the communication interface 1306. In some embodiments, the processing circuitry 1302 and memory 1304 is integrated.

The communication interface 1306 is used in wired or wireless communication of signaling and/or data between a network node, access network, and/or UE. As illustrated, the communication interface 1306 comprises port(s)/terminal(s) 1316 to send and receive data, for example to and from a network over a wired connection. The communication interface 1306 also includes radio front-end circuitry 1318 that may be coupled to, or in certain embodiments a part of, the antenna 1310. Radio front-end circuitry 1318 comprises filters 1320 and amplifiers 1322. The radio front-end circuitry 1318 may be connected to an antenna 1310 and processing circuitry 1302. The radio front-end circuitry may be configured to condition signals communicated between antenna 1310 and processing circuitry 1302. The radio front-end circuitry 1318 may receive digital data that is to be sent out to other network nodes or UEs via a wireless connection. The radio front-end circuitry 1318 may convert the digital data into a radio signal having the appropriate channel and bandwidth parameters using a combination of filters 1320 and/or amplifiers 1322. The radio signal may then be transmitted via the antenna 1310. Similarly, when receiving data, the antenna 1310 may collect radio signals which are then converted into digital data by the radio front-end circuitry 1318. The digital data may be passed to the processing circuitry 1302. In other embodiments, the communication interface may comprise different components and/or different combinations of components.

In certain alternative embodiments, the network node 1300 does not include separate radio front-end circuitry 1318, instead, the processing circuitry 1302 includes radio front-end circuitry and is connected to the antenna 1310. Similarly, in some embodiments, all or some of the RF transceiver circuitry 1312 is part of the communication interface 1306. In still other embodiments, the communication interface 1306 includes one or more ports or terminals 1316, the radio front-end circuitry 1318, and the RF transceiver circuitry 1312, as part of a radio unit (not shown), and the communication interface 1306 communicates with the baseband processing circuitry 1314, which is part of a digital unit (not shown).

The antenna 1310 may include one or more antennas, or antenna arrays, configured to send and/or receive wireless signals. The antenna 1310 may be coupled to the radio front-end circuitry 1318 and may be any type of antenna capable of transmitting and receiving data and/or signals wirelessly. In certain embodiments, the antenna 1310 is separate from the network node 1300 and connectable to the network node 1300 through an interface or port.

The antenna 1310, communication interface 1306, and/or the processing circuitry 1302 may be configured to perform any receiving operations and/or certain obtaining operations described herein as being performed by the network node. Any information, data and/or signals may be received from a UE, another network node and/or any other network equipment. Similarly, the antenna 1310, the communication interface 1306, and/or the processing circuitry 1302 may be configured to perform any transmitting operations described herein as being performed by the network node. Any information, data and/or signals may be transmitted to a UE, another network node and/or any other network equipment.

The power source 1308 provides power to the various components of network node 1300 in a form suitable for the respective components (e.g., at a voltage and current level needed for each respective component). The power source 1308 may further comprise, or be coupled to, power management circuitry to supply the components of the network node 1300 with power for performing the functionality described herein. For example, the network node 1300 may be connectable to an external power source (e.g., the power grid, an electricity outlet) via an input circuitry or interface such as an electrical cable, whereby the external power source supplies power to power circuitry of the power source 1308. As a further example, the power source 1308 may comprise a source of power in the form of a battery or battery pack which is connected to, or integrated in, power circuitry. The battery may provide backup power should the external power source fail.

Embodiments of the network node 1300 may include additional components beyond those shown in Figure 13 for providing certain aspects of the network node's functionality, including any of the functionality described herein and/or any functionality necessary to support the subject matter described herein. For example, the network node 1300 may include user interface equipment to allow input of information into the network node 1300 and to allow output of information from the network node 1300. This may allow a user to perform diagnostic, maintenance, repair, and other administrative functions for the network node 1300.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

Although the invention has been explained in relation to its preferred embodiment(s) as mentioned above, it is to be understood that many other possible modifications and variations can be made without departing from the scope of the present invention, which is defined by the claims.

## Claims

1. A method performed by a server (20) for sharing sensor measurements (22) with one or more mobile nodes (12), the method comprising:
obtaining (900), based on data reported from the one or more mobile nodes (12) via one or more radio network nodes, predictions (31) about sensor measurements (22) that will be needed by the one or more mobile nodes (12);
based on the predictions (31), requesting (910) sensor measurements (22) from one or more connected sensors that are connected to the server (20);
receiving (920) the requested sensor measurements (22) via the one or more radio network nodes; and
sharing (930) the received sensor measurements (22) with the one or more mobile nodes (12) via the one or more radio network nodes.

2. The method of claim 1, wherein said requesting comprises selecting, based on the predictions (31), from which one or more connected sensors to request sensor measurements (22) and requesting sensor measurements (22) from the one or more selected connected sensors.

3. The method of claim 2, wherein the predictions (31) include predictions (31) of locations from which sensor measurements (22) will be needed by one or more mobile nodes (12), and wherein selecting from which one or more connected sensors to request sensor measurements (22) comprises selecting one or more connected sensors that will be able to obtain sensor measurements from the predicted locations.

4. The method of claim 3, wherein the locations from which sensor measurements (22) will be needed at a certain time are predicted based on information indicating locations where one or more mobile nodes (12) will be at the certain time and wherein the information indicating locations where one or more mobile nodes (12) will be at the certain time includes respective trajectories of multiple mobile nodes (12), wherein the locations from which sensor measurements (22) will be needed at the certain time are predicted as including at least locations where trajectories of the multiple mobile nodes (12) intersect.

5. The method of claim 4, wherein the locations from which sensor measurements (22) will be needed at the certain time are predicted also based on:
uncertainty in the locations where one or more mobile nodes (12) will be at the certain time; and/or
locations of one or more objects other than the one or more mobile nodes (12).

6. The method of any of claims 3-5, wherein which one or more connected sensors the server (20) requests sensor measurements (22) from is adapted over time to reflect changes over time in the locations from which sensor measurements (22) are predicted to be needed by one or more mobile nodes (12).

7. The method of any of claims 1-6, wherein the predictions (31) include at least one of
predictions (31) of times at which one or more mobile nodes (12) will need sensor measurements (22) and wherein said requesting comprises requesting connected sensors to obtain sensor measurements (22) at the predicted times,
predictions (31) of levels of precision or accuracy with which one or more mobile nodes (12) will need sensor measurements (22).

8. The method of claim 7, further comprising transmitting, to each of one or more connected sensors, signaling indicating times at which sensor measurements (22) will be needed from the connected sensor and/or times at which sensor measurements (22) will not be needed from the connected sensor.

9. The method of any of claims 1-8, wherein obtaining predictions (31) comprises making predictions (31) of times at which one or more mobile nodes (12) will need sensor measurements (22) and/or predictions (31) of levels of precision or accuracy with which one or more mobile nodes (12) will need sensor measurements (22), based on at least one of any one or more of:
predictions (31) of locations from which sensor measurements (22) will be needed by one or more mobile nodes (12);
characteristics of locations from which sensor measurements (22) are predicted to be needed by one or more mobile nodes (12);
criticality of sensor measurements (22) that will be needed by one or more mobile nodes (12); and
age of, and/or level of precision or accuracy of, sensor measurements (22) already available the server (20).

10. The method of any of claims 1-9, wherein requesting sensor measurements (22) from one or more connected sensors is performed also based on at least one of any one or more of:
one or more capabilities of one or more connected sensors;
one or more locations of one or more connected sensors;
one or more transmission resources used by one or more connected sensors; and
energy consumption of one or more connected sensors.

11. The method of any of claims 1-10, wherein said obtaining and requesting is performed as part of adapting from which one or more connected sensors the server (20) requests sensor measurements (22) and/or adapting when and/or how often the server (20) requests sensor measurements (22) from one or more connected sensors, as needed to meet a target objective while still obtaining the sensor measurements (22) that will be needed by the one or more mobile nodes (12).

12. The method of claim 11, wherein the target objective is minimization of a metric reflecting energy, and/or communication resources, consumed by one or more connected sensors in performing sensor measurements (22) and/or consumed by one or more connected sensors in sending sensor measurements (22) to the server (20).

13. The method of any of claims 11-12, wherein the target objective is minimization of how many connected sensors send sensor measurements (22) to the server (20) at any given time.

14. A server (20) configured to share sensor measurements (22) with mobile nodes (12), the server (20) configured to perform the method of claim 1.

15. The server (20) of claim 14, configured to perform the method of any of claims 2-13.

## Patentansprüche

1. Verfahren, das von einem Server (20) durchgeführt wird, zum Teilen von Sensormessungen (22) mit einem oder mehreren mobilen Knoten (12), wobei das Verfahren Folgendes umfasst:
Erhalten (900) von Vorhersagen (31) über Sensormessungen (22), die von dem einen oder den mehreren mobilen Knoten (12) benötigt werden, basierend auf Daten, die von dem einen oder den mehreren mobilen Knoten (12) über einen oder mehrere Funknetzwerkknoten gemeldet werden,
basierend auf den Vorhersagen (31) Anfordern (910) von Sensormessungen (22) von einem oder mehreren verbundenen Sensoren, die mit dem Server (20) verbunden sind;
Empfangen (920) der angeforderten Sensormessungen (22) über den einen oder die mehreren Funknetzwerkknoten; und
Teilen (930) der empfangenen Sensormessungen (22) mit dem einen oder den mehreren mobilen Knoten (12) über den einen oder die mehreren Funknetzwerkknoten.

2. Verfahren nach Anspruch 1, wobei das Anfordern Auswählen basierend auf den Vorhersagen (31), von welchem des einen oder der mehreren verbundenen Sensoren Sensormessungen (22) angefordert werden sollen, und Anfordern von Sensormessungen (22) von dem einen oder den mehreren ausgewählten verbundenen Sensoren umfasst.

3. Verfahren nach Anspruch 2, wobei die Vorhersagen (31) Vorhersagen (31) von Standorten umfassen, von denen Sensormessungen (22) von dem einen oder den mehreren mobilen Knoten (12) benötigt werden, und wobei das Auswählen, von welchen des einen oder der mehreren verbundenen Sensoren Sensormessungen (22) angefordert werden sollen, Auswählen eines oder mehrerer verbundener Sensoren umfasst, die in der Lage sind, Sensormessungen von den vorhergesagten Standorten zu erhalten.

4. Verfahren nach Anspruch 3, wobei die Standorte, von denen Sensormessungen (22) zu einem bestimmten Zeitpunkt benötigt werden, basierend auf Informationen vorhergesagt werden, die Standorte angeben, an denen sich ein oder mehrere mobile Knoten (12) zu dem bestimmten Zeitpunkt befinden, und wobei die Informationen, die Standorte angeben, an denen sich ein oder mehrere mobile Knoten (12) zu dem bestimmten Zeitpunkt befinden, jeweilige Trajektorien mehrerer mobiler Knoten (12) umfassen, wobei die Standorte, von denen Sensormessungen (22) zu dem bestimmten Zeitpunkt benötigt werden, laut Vorhersage zumindest die Standorte umfassen, an denen sich Trajektorien der mehreren mobilen Knoten (12) schneiden.

5. Verfahren nach Anspruch 4, wobei die Standorte, von denen Sensormessungen (22) zu dem bestimmten Zeitpunkt benötigt werden, basierend auf Folgendem vorhergesagt werden:
einer Ungewissheit hinsichtlich der Standorte, an denen sich ein oder mehrere mobile Knoten (12) zu dem bestimmten Zeitpunkt befinden werden; und/oder
Standorten eines oder mehrerer Objekte außer dem einen oder den mehreren mobilen Knoten (12).

6. Verfahren nach einem der Ansprüche 3-5, wobei im Lauf der Zeit angepasst wird, von welchen des einen oder der mehreren verbundenen Sensoren der Server (20) Sensormessungen (22) anfordert, um Änderungen der Standorte, von denen laut Vorhersage Sensormessungen (22) von dem einen oder den mehreren mobilen Knoten (12) benötigt werden, im Lauf der Zeit widerzuspiegeln.

7. Verfahren nach einem der Ansprüche 1-6, wobei die Vorhersagen (31) mindestens eines umfassen von
Vorhersagen (31) von Zeitpunkten, zu denen ein oder mehrere mobile Knoten (12) Sensormessungen (22) benötigen werden, und wobei das Anfordern Anfordern verbundener Sensoren umfasst, um Sensormessungen (22) zu den vorhergesagten Zeitpunkten zu erhalten,
Vorhersagen (31) von Präzisions- oder Genauigkeitsgrad, mit denen ein oder mehrere mobile Knoten (12) Sensormessungen (22) benötigen werden.

8. Verfahren nach Anspruch 7, ferner umfassend Senden von Signalisierung, die Zeitpunkte angibt, zu denen Sensormessungen (22) von den verbundenen Sensoren benötigt werden, und/oder Zeitpunkte, zu denen keine Sensormessungen (22) von den verbundenen Sensoren benötigt werden, an jeden des einen oder der mehreren verbundenen Sensoren.

9. Verfahren nach einem der Ansprüche 1-8, wobei das Erhalten von Vorhersagen (31) Durchführen von Vorhersagen (31) von Zeitpunkten, zu denen ein oder mehrere mobile Knoten (12) Sensormessungen (22) benötigen werden, und/oder Vorhersagen (31) von Präzisions- oder Genauigkeitsgraden, mit denen ein oder mehrere mobile Knoten (12) Sensormessungen (22) benötigen werden, basierend auf mindestens einem von einem oder mehreren von Folgenden umfasst:
Vorhersagen (31) von Standorten, von denen von einem oder mehreren mobilen Knoten (12) Sensormessungen (22) benötigt werden;
Charakteristiken von Standorten, von denen laut Vorhersage von einem oder mehreren mobilen Knoten (12) Sensormessungen (22) benötigt werden;
Kritikalität von Sensormessungen (22), die von einem oder mehreren mobilen Knoten (12) benötigt werden; und
Alter und/oder Präzisions- oder Genauigkeitsgrad von Sensormessungen (22), die für den Server (20) bereits verfügbar sind.

10. Verfahren nach einem der Ansprüche 1-9, wobei das Anfordern von Sensormessungen (22) von einem oder mehreren verbundenen Sensoren außerdem basierend auf mindestens einem von einem oder mehreren von Folgenden durchgeführt wird:
einer oder mehreren Fähigkeiten eines oder mehrerer verbundener Sensoren;
einem oder mehreren Standorten eines oder mehrerer verbundener Sensoren;
einer oder mehreren Übertragungsressourcen, die von einem oder mehreren verbundenen Sensoren verwendet werden; und
dem Energieverbrauch eines oder mehrerer verbundener Sensoren.

11. Verfahren nach einem der Ansprüche 1-10, wobei das Erhalten und Anfordern als Teil des Anpassens, von welchen des einen oder der mehreren verbundenen Sensoren der Server (20) Sensormessungen (22) anfordert, und/oder des Anpassens, wann und/oder wie oft, je nach Bedarf, um eine Zielsetzung zu erreichen, der Server (20) Sensormessungen (22) von einem oder mehreren verbundenen Sensoren anfordert, durchgeführt wird, während weiterhin Sensormessungen (22) erhalten werden, die von dem einen oder den mehreren mobilen Knoten (12) benötigt werden..

12. Verfahren nach Anspruch 11, wobei die Zielsetzung die Minimierung einer Metrik, die Energie widerspiegelt, und/oder von Kommunikationsressourcen ist, die von einem oder mehreren verbundenen Sensoren beim Durchführen von Sensormessungen (22) verbraucht werden und/oder von einem oder mehreren verbundenen Sensoren beim Senden von Sensormessungen (22) an den Server (20) verbraucht werden.

13. Verfahren nach einem der Ansprüche 11-12, wobei die Zielsetzung die Minimierung dessen ist, wie viele verbundene Sensoren zu einem gegebenen Zeitpunkt Sensormessungen (22) an den Server (20) senden.

14. Server (20), der zum Teilen von Sensormessungen (22) mit mobilen Knoten (12) konfiguriert ist, wobei der Server (20) zum Durchführen des Verfahrens nach Anspruch 1 konfiguriert ist.

15. Server (20) nach Anspruch 14, der zum Durchführen des Verfahrens nach einem der Ansprüche 2-13 konfiguriert ist.

## Revendications

1. Procédé réalisé par un serveur (20) pour partager des mesures de capteur (22) avec un ou plusieurs nœuds mobiles (12), le procédé comprenant :
l'obtention (900), sur la base de données rapportées par les un ou plusieurs nœuds mobiles (12) via un ou plusieurs nœuds de réseau radio, de prédictions (31) au sujet de mesures de capteur (22) qui seront nécessaires aux un ou plusieurs nœuds mobiles (12) ;
sur la base des prédictions (31), la demande (910) de mesures de capteur (22) à un ou plusieurs capteurs connectés qui sont connectés au serveur (20) ;
la réception (920) des mesures de capteur (22) demandées via les un ou plusieurs nœuds de réseau radio ; et
le partage (930) des mesures de capteur (22) reçues avec les un ou plusieurs nœuds mobiles (12) via les un ou plusieurs nœuds de réseau radio.

2. Procédé selon la revendication 1, dans lequel ladite demande comprend la sélection, sur la base des prédictions (31), d'un ou plusieurs capteurs connectés auxquels demander des mesures de capteur (22) et la demande de mesures de capteur (22) aux un ou plusieurs capteurs connectés sélectionnés.

3. Procédé selon la revendication 2, dans lequel les prédictions (31) incluent des prédictions (31) d'emplacements desquels des mesures de capteur (22) seront nécessaires aux un ou plusieurs nœuds mobiles (12), et dans lequel la sélection d'un ou plusieurs capteurs connectés desquels demander des mesures de capteur (22) comprend la sélection d'un ou plusieurs capteurs connectés qui seront aptes à obtenir des mesures de capteur des emplacements prédits.

4. Procédé selon la revendication 3, dans lequel les emplacements desquels des mesures de capteur (22) seront nécessaires à un certain temps sont prédits sur la base d'informations indiquant des emplacements auxquels un ou plusieurs nœuds mobiles (12) se trouveront au certain temps et dans lequel les informations indiquant des emplacements auxquels un ou plusieurs nœuds mobiles (12) se trouveront au certain temps incluent des trajectoires respectives de multiples nœuds mobiles (12), dans lequel les emplacements desquels des mesures de capteur (22) seront nécessaires au certain temps sont prédits comme incluant au moins des emplacements auxquels des trajectoires des multiples nœuds mobiles (12) se croisent.

5. Procédé selon la revendication 4, dans lequel les emplacements desquels des mesures de capteur (22) seront nécessaires au certain temps sont prédits également sur la base de :
une incertitude relative aux emplacements auxquels un ou plusieurs nœuds mobiles (12) se trouveront au certain temps ; et/ou
des emplacements d'un ou plusieurs objets autres que les un ou plusieurs nœuds mobiles (12).

6. Procédé selon l'une quelconque des revendications 3 à 5, dans lequel la sélection des un ou plusieurs capteurs connectés auxquels le serveur (20) demande des mesures de capteur (22) est adaptée au fil du temps pour refléter des modifications au fil du temps des emplacements desquels des mesures de capteur (22) sont prédites comme étant nécessaires par un ou plusieurs nœuds mobiles (12).

7. Procédé selon l'une quelconque des revendications 1 à 6, dans lequel les prédictions (31) incluent au moins l'une
de prédictions (31) de temps auxquels un ou plusieurs nœuds mobiles (12) nécessiteront des mesures de capteur (22) et dans lequel ladite demande comprend la demande à des capteurs connectés d'obtenir des mesures de capteur (22) aux temps prédits,
des prédictions (31) de niveaux de précision ou d'exactitude auxquels un ou plusieurs nœuds mobiles (12) nécessiteront des mesures de capteur (22).

8. Procédé selon la revendication 7, comprenant en outre la transmission, à chacun d'un ou plusieurs capteurs connectés, d'une signalisation indiquant des temps auxquels des mesures de capteur (22) seront nécessaires du capteur connecté et/ou des temps auxquels des mesures de capteur (22) ne seront pas nécessaires du capteur connecté.

9. Procédé selon l'une quelconque des revendications 1 à 8, dans lequel l'obtention de prédictions (31) comprend la réalisation de prédictions (31) de temps auxquels un ou plusieurs nœuds mobiles (12) nécessiteront des mesures de capteur (22) et/ou des prédictions (31) de niveaux de précision ou d'exactitude auxquels un ou plusieurs nœuds mobiles (12) nécessiteront des mesures de capteur (22), sur la base d'au moins l'un parmi :
des prédictions (31) d'emplacements desquels des mesures de capteur (22) seront nécessaires aux un ou plusieurs nœuds mobiles (12) ;
des caractéristiques d'emplacements desquels des mesures de capteur (22) sont prédites comme étant nécessaire à un ou plusieurs nœuds mobiles (12) ;
la criticité de mesures de capteur (22) qui seront nécessaires à un ou plusieurs nœuds mobiles (12) ; et
l'âge et/ou le niveau de précision ou d'exactitude de mesures de capteur (22) déjà disponibles au serveur (20).

10. Procédé selon l'une quelconque des revendications 1 à 9, dans lequel la demande de mesures de capteur (22) d'un ou plusieurs capteurs connectés est réalisée également sur la base d'au moins l'un parmi :
une ou plusieurs capacités d'un ou plusieurs capteurs connectés ;
un ou plusieurs emplacements d'un ou plusieurs capteurs connectés ;
une ou plusieurs ressources de transmission utilisées par un ou plusieurs capteurs connectés ; et
une consommation d'énergie d'un ou plusieurs capteurs connectés.

11. Procédé selon l'une quelconque des revendications 1 à 10, dans lequel ladite obtention et ladite demande sont réalisées dans le cadre de l'adaptation de la sélection d'un ou plusieurs capteurs connectés auxquels le serveur (20) demande des mesures de capteur (22) et/ou l'adaptation du moment et/ou de la fréquence auxquels le serveur (20) demande des mesures de serveur (22) à un ou plusieurs capteurs connectés, selon les besoins pour atteindre un objectif cible tout en obtenant toujours les mesures de capteur (22) qui seront nécessaires aux un ou plusieurs nœuds mobiles (12).

12. Procédé selon la revendication 11, dans lequel l'objectif cible est la minimisation d'une métrique reflétant l'énergie et/ou des ressources de communication consommées par un ou plusieurs capteurs connectés dans la réalisation de mesures de capteur (22) et/ou consommées par un ou plusieurs capteurs connectés dans l'envoi de mesures de capteur (22) au serveur (20).

13. Procédé selon l'une quelconque des revendications 11 et 12, dans lequel l'objectif cible est la minimisation du nombre de capteurs connectés qui envoient des mesures de capteur (22) au serveur (20) à tout moment donné.

14. Serveur (20) configuré pour partager des mesures de capteur (22) avec des nœuds mobiles (12), le serveur (20) étant configuré pour réaliser le procédé selon la revendication 1.

15. Serveur (20) selon la revendication 14, configuré pour réaliser le procédé selon l'une quelconque des revendications 2 à 13.
